# EUROPEAN PATENT SPECIFICATION

(11) **EP 2 871 855 B1**
(45) Date of publication and mention of the grant of the patent: **26.10.2016**
(21) Application number: 14814668.1
(22) Date of filing: 06.08.2014
(51) Int. Cl.: H04R 5/00, H04M 1/725, H04M 1/60, G11B 31/00, H04N 5/77, H04N 5/781, H04R 5/04, H04S 1/00, H04N 5/76

(54) **RECORDING METHOD AND APPARATUS, AND TERMINAL**
AUFZEICHNUNGSVERFAHREN, VORRICHTUNG UND ENDGERÄT
PROCÉDÉ ET APPAREIL D'ENREGISTREMENT, ET TERMINAL

(30) Priority: 03.09.2013 CN 201310395351
(43) Date of publication of application: 13.05.2015
(60) Divisional application: 16183997.2
(73) Proprietor: Huawei Technologies Co., Ltd., Longgang District Shenzhen, Guangdong 518129 (CN)
(72) Inventor: CHEN, Xi, Shenzhen Guangdong 518129 (CN)
(74) Representative: Epping - Hermann - Fischer
(86) International application number: PCT/CN2014/083789
(87) International publication number: WO 2015/032254

(56) References cited:
- CN-A- 102 130 992
- CN-A- 103 458 210
- CN-U- 201 839 330
- CN-U- 201 967 106
- CN-U- 202 889 423
- US-A1- 2006 045 294
- US-A1- 2007 036 363
- US-A1- 2010 128 892
- US-A1- 2012 128 175

## Description

### TECHNICAL FIELD

The present invention relates to the audio and video recording and playing field, and in particular, to a recording method, apparatus, and terminal.

### BACKGROUND

At present, a video that has a sound and is played on a video device may have a stereophonic effect. A video having a stereophonic effect can create an immersive atmosphere for a listener. This immersive experience includes real reproduction concerning where a sound in the video is produced, how the sound changes, and the like.

However, when a user uses a terminal to record a video, a placement location of the terminal may not be fixed, and therefore, it is likely to cause a problem, which is caused as a result of a change in location status of the terminal, that a stereophonic effect of a recorded video is poor or even no stereophonic effect is produced.

US 20060045294 A1 provides that a listener can experience the sound of virtual loudspeakers over headphones with a level of realism that is difficult to distinguish from the real loudspeaker experience. Sets of personalized room impulse responses (PRIRs) are acquired for the loudspeaker sound sources over a limited number of listener head positions. The PRIRs are then used to transform an audio signal for the loudspeakers into a virtualized output for the headphones. Basing the transformation on the listener's head position, the system can adjust the transformation so that the virtual loudspeakers appear not to move as the listener moves the head.

US 20100128892 A1 provides a device that includes a microphone array fixed to the device. A signal processor produces an audio output using audio beamforming with input from the microphone array. The signal processor aims the beamforming in a selected direction. An orientation sensor-such as a compass, an accelerometer, or an inertial sensor-is coupled to the signal processor. The orientation sensor detects a change in the orientation of the microphone array and provides an orientation signal to the signal processor for adjusting the aim of the beamforming to maintain the selected direction. The device may include a camera that captures an image. An image processor may identify an audio source in the image and provide a signal adjusting the selected direction to follow the audio source. The image processor may receive the orientation signal and adjust the image for changes in the orientation of the camera before tracking movement of the audio source.

### SUMMARY

Embodiments of the present invention provide a recording method, apparatus, and terminal, which can prevent a problem that a stereophonic effect of a recorded video is poor as a result of a change in location status of a terminal, thereby improving recording quality and therefore improving user experience.

According to a first aspect of the present invention, a recording method is provided, where the method is applied to a terminal that includes two sound channels, at least two audio sensor units, and at least one photographing unit, and the method includes:
acquiring a placement status parameter of the terminal according to current placement status of the terminal, wherein the placement status parameter includes vertical-direction and upside-up state, vertical-direction and upside-down state, transverse-direction and upside-up state, transverse-direction and upside-down state, or inclined placement state;
determining that one photographing unit of the at least one photographing unit is in a started state;
determining a recording correspondence between the at least two audio sensor units and the two sound channels according to the acquired placement status parameter and
the determined photographing unit in the started state; and
adjusting volume of the at least two audio sensor units according to the recording correspondence between the at least two audio sensor units and the two sound channels, so that a difference between volume that passes through the two sound channels is less than a preset threshold;
wherein the method further comprises:
storing a recording policy of determining, according to placement status of the terminal and the photographing unit in the started state, the recording correspondence between the audio sensor units and the sound channels; and
   the determining a recording correspondence between the at least two audio sensor units and the two sound channels according to the acquired placement status parameter and the determined photographing unit in the started state is specifically: querying the recording policy according to the acquired placement status parameter and the determined photographing unit in the started state, so as to determine the recording correspondence between the at least two audio sensor units and the two sound channels.

In a first possible implementation manner of the first aspect, the at least one photographing unit includes a front-facing photographing unit and/or a rear-facing photographing unit; and
the determining that one photographing unit of the at least one photographing unit is in a started state is specifically: determining that the front-facing photographing unit or the rear-facing photographing unit is in a started state.

With reference to the first possible implementation manner of the first aspect, in a second possible implementation manner of the first aspect, the at least two audio sensor units include a first audio sensor unit and a second audio sensor unit, where the first audio sensor unit and the second audio sensor unit are arranged symmetrically, with a vertical axis of the terminal being a central line.

With reference to the first possible implementation manner of the first aspect or the second possible implementation manner of the first aspect, in a third possible implementation manner of the first aspect, the method includes:
when the at least one photographing unit is the front-facing photographing unit,
if the current placement status of the terminal is a vertical-direction and upside-up state, acquiring a current placement status parameter of the terminal, and determining that the front-facing photographing unit is in the started state, where the determining a recording correspondence between the at least two audio sensor units and the two sound channels according to the acquired placement status parameter and the determined photographing unit in the started state is specifically: determining, according to the acquired placement status parameter and the determined front-facing photographing unit in the started state, that the first audio sensor unit records a right sound channel and the second audio sensor unit records a left sound channel; or
if the current placement status of the terminal is a vertical-direction and upside-down state, acquiring a current placement status parameter of the terminal, and determining that the front-facing photographing unit is in the started state, where the determining a recording correspondence between the at least two audio sensor units and the two sound channels according to the acquired placement status parameter and the determined photographing unit in the started state is specifically: determining, according to the acquired placement status parameter and the determined front-facing photographing unit in the started state, that the first audio sensor unit records a left sound channel and the second audio sensor unit records a right sound channel.

With reference to the first possible implementation manner of the first aspect or the second possible implementation manner of the first aspect, in a fourth possible implementation manner of the first aspect, the method includes:
when the at least one photographing unit is the rear-facing photographing unit,
if the current placement status of the terminal is a vertical-direction and upside-up state, acquiring a current placement status parameter of the terminal, and determining that the rear-facing photographing unit is in the started state, where the determining a recording correspondence between the at least two audio sensor units and the two sound channels according to the acquired placement status parameter and the determined photographing unit in the started state is specifically: determining, according to the acquired placement status parameter and the determined rear-facing photographing unit in the started state, that the first audio sensor unit records a left sound channel and the second audio sensor unit records a right sound channel; or
if the current placement status of the terminal is a vertical-direction and upside-down state, acquiring a current placement status parameter of the terminal, and determining that the rear-facing photographing unit is in the started state, where the determining a recording correspondence between the at least two audio sensor units and the two sound channels according to the acquired placement status parameter and the determined photographing unit in the started state is specifically: determining, according to the acquired placement status parameter and the determined rear-facing photographing unit in the started state, that the first audio sensor unit records a right sound channel and the second audio sensor unit records a left sound channel.

With reference to the first possible implementation manner of the first aspect, in a fifth possible implementation manner of the first aspect, the at least two audio sensor units include a first audio sensor unit and a second audio sensor unit, where the first audio sensor unit and the second audio sensor unit are arranged symmetrically, with a transverse axis of the terminal being a central line.

With reference to the first possible implementation manner or the fifth possible implementation manner of the first aspect, in a sixth possible implementation manner of the first aspect, the method includes:
when the at least one photographing unit is the front-facing photographing unit,
if the current placement status of the terminal is a transverse-direction and upside-up state, acquiring a current placement status parameter of the terminal, and determining that the front-facing photographing unit is in the started state, where the determining a recording correspondence between the at least two audio sensor units and the two sound channels according to the acquired placement status parameter and the determined photographing unit in the started state is specifically: determining, according to the acquired placement status parameter and the determined front-facing photographing unit in the started state, that the first audio sensor unit records a right sound channel and the second audio sensor unit records a left sound channel; or
if the current placement status of the terminal is a transverse-direction and upside-down state, acquiring a current placement status parameter of the terminal, and determining that the front-facing photographing unit is in the started state, where the determining a recording correspondence between the at least two audio sensor units and the two sound channels according to the acquired placement status parameter and the determined photographing unit in the started state is specifically: determining, according to the acquired placement status parameter and the determined front-facing photographing unit in the started state, that the first audio sensor unit records a left sound channel and the second audio sensor unit records a right sound channel.

With reference to the first possible implementation manner or the fifth possible implementation manner of the first aspect, in a seventh possible implementation manner of the first aspect, the method includes: when the at least one photographing unit is the rear-facing photographing unit,
if the current placement status of the terminal is a transverse-direction and upside-up state, acquiring a current placement status parameter of the terminal, and determining that the rear-facing photographing unit is in the started state, where the determining a recording correspondence between the at least two audio sensor units and the two sound channels according to the acquired placement status parameter and the determined photographing unit in the started state is specifically: determining, according to the acquired placement status parameter and the determined rear-facing photographing unit in the started state, that the first audio sensor unit records a left sound channel and the second audio sensor unit records a right sound channel; or
if the current placement status of the terminal is a transverse-direction and upside-down state, acquiring a current placement status parameter of the terminal, and determining that the rear-facing photographing unit is in the started state, where the determining a recording correspondence between the at least two audio sensor units and the two sound channels according to the acquired placement status parameter and the determined photographing unit in the started state is specifically: determining, according to the acquired placement status parameter and the rear-facing photographing unit in the started state, that the first audio sensor unit records a right sound channel and the second audio sensor unit records a left sound channel.

With reference to the first aspect or any implementation manner of the possible implementation manners of the first aspect, in an eighth possible implementation manner of the first aspect, the adjusting volume of the at least two audio sensor units according to the recording correspondence between the at least two audio sensor units and the two sound channels, so that a difference between volume that passes through the two sound channels is less than a preset threshold includes:
adjusting, according to a recording correspondence between the first audio sensor unit, the second audio sensor unit, and the two sound channels, volume of the first audio sensor unit and the second audio sensor unit to gradually increase both simultaneously, gradually decrease both simultaneously, or increase both to maximum simultaneously, so that the difference between the volume that passes through the two sound channels is less than the preset threshold.

With reference to the first possible implementation manner of the first aspect, in a ninth possible implementation manner of the first aspect, the at least one photographing unit includes the front-facing photographing unit and the rear-facing photographing unit;
before the determining that one photographing unit of the at least one photographing unit is in a started state, the method further includes:
   acquiring location information of a recording object;
   the determining that one photographing unit of the at least one photographing unit is in a started state is specifically: determining, according to the acquired location information of the recording object, that the front-facing photographing unit or the rear-facing photographing unit is in the started state; where
   when the recording object is on a same side as a front surface of the terminal, determining that the front-facing photographing unit is in the started state; and when the recording object is on a same side as a rear surface of the terminal, determining that the rear-facing photographing unit is in the started state.

With reference to the ninth possible implementation manner of the first aspect, in a tenth possible implementation manner of the first aspect, the at least two audio sensor units are three audio sensor units; and
the determining a recording correspondence between the at least two audio sensor units and the two sound channels according to the acquired placement status parameter and the determined photographing unit in the started state includes:
determining, according to the acquired placement status parameter, that the three audio sensor units are in a started state; and
determining, according to the determined photographing unit in the started state, that two audio sensor units of the three audio sensor units record a right sound channel and one audio sensor unit records a left sound channel, or that two audio sensor units of the three audio sensor units record a left sound channel and one audio sensor unit records a right sound channel.

With reference to the tenth possible implementation manner of the first aspect, in an eleventh possible implementation manner of the first aspect, the adjusting volume of the at least two audio sensor units according to the recording correspondence between the at least two audio sensor units and the two sound channels, so that a difference between volume that passes through the two sound channels is less than a preset threshold includes:
when it is determined that two audio sensor units of the three audio sensor units record the right sound channel and one audio sensor unit records the left sound channel, adjusting combined volume of the two audio sensor units that record the right sound channel to gradually decrease the combined volume, and adjusting volume of the one audio sensor unit that records the left sound channel to maximum or to gradually increase the volume, so that the difference between the volume that passes through the two sound channels is less than the preset threshold; or
when it is determined that two audio sensor units of the three audio sensor units record the left sound channel and one audio sensor unit records the right sound channel, adjusting combined volume of the two audio sensor units that record the left sound channel to gradually decrease the combined volume, and adjusting volume of the one audio sensor unit that records the right sound channel to maximum or to gradually increase the volume, so that the difference between the volume that passes through the two sound channels is less than the preset threshold.

According to a second aspect of the present invention, a recording apparatus is provided, where the apparatus is applied to a terminal that includes two sound channels, at least two audio sensor units, and at least one photographing unit, and the apparatus includes:
a placement parameter acquiring unit, configured to acquire a placement status parameter of the terminal according to current placement status of the terminal, wherein the placement status parameter includes vertical-direction and upside-up state, vertical-direction and upside-down state, transverse-direction and upside-up state, transverse-direction and upside-down state, or inclined placement state;
a photographing starting determining unit, configured to determine that one photographing unit of the at least one photographing unit is in a started state;
a recording relationship determining unit, configured to determine a recording correspondence between the at least two audio sensor units and the two sound channels according to the placement status parameter acquired by the placement parameter acquiring unit, and the photographing unit, determined by the photographing starting determining unit, in the started state; and
a volume adjusting unit, configured to adjust volume of the at least two audio sensor units according to the recording correspondence that is determined by the recording relationship determining unit and between the at least two audio sensor units and the two sound channels, so that a difference between volume that passes through the two sound channels is less than a preset threshold;
   wherein the apparatus further comprises:
   a storing unit, configured to store, in the terminal in advance, a recording policy of determining, according to current placement status of the terminal and the determined photographing unit in the started state, the recording correspondence between the audio sensor units and the sound channels; and
the recording relationship determining unit is further configured to query the recording policy according to the placement status parameter acquired by the placement parameter acquiring unit, and the photographing unit, determined by the photographing starting determining unit, in the started state, so as to determine the recording correspondence between the at least two audio sensor units and the two sound channels.

In a first possible implementation manner of the second aspect, the at least one photographing unit includes a front-facing photographing unit and/or a rear-facing photographing unit; and
the photographing starting determining unit is specifically configured to: determine that the front-facing photographing unit or the rear-facing photographing unit is in a started state.

With reference to the first possible implementation manner of the second aspect, in a second possible implementation manner of the second aspect, the at least two audio sensor units include a first audio sensor unit and a second audio sensor unit, where the first audio sensor unit and the second audio sensor unit are arranged symmetrically, with a vertical axis of the terminal being a central line.

With reference to the first possible implementation manner of the second aspect or the second possible implementation manner of the second aspect, in a third possible implementation manner of the second aspect,
when the at least one photographing unit is the front-facing photographing unit,
if the current placement status of the terminal is a vertical-direction and upside-up state, the placement parameter acquiring unit acquires a current placement status parameter of the terminal, and the photographing starting determining unit determines that the front-facing photographing unit is in the started state, where the recording relationship determining unit is specifically configured to: determine, according to the placement status parameter acquired by the placement parameter acquiring unit, and the front-facing photographing unit, determined by the photographing starting determining unit, in the started state, that the first audio sensor unit records a right sound channel and the second audio sensor unit records a left sound channel; or
if the current placement status of the terminal is a vertical-direction and upside-down state, the placement parameter acquiring unit acquires a current placement status parameter of the terminal, and the photographing starting determining unit determines that the front-facing photographing unit is in the started state, where the recording relationship determining unit is specifically configured to: determine, according to the placement status parameter acquired by the placement parameter acquiring unit, and the front-facing photographing unit, determined by the photographing starting determining unit, in the started state, that the first audio sensor unit records a left sound channel and the second audio sensor unit records a right sound channel.

With reference to the first possible implementation manner of the second aspect or the second possible implementation manner of the second aspect, in a fourth possible implementation manner of the second aspect,
when the at least one photographing unit is the rear-facing photographing unit,
if the current placement status of the terminal is a vertical-direction and upside-up state, the placement parameter acquiring unit acquires a current placement status parameter of the terminal, and the photographing starting determining unit determines that the rear-facing photographing unit is in the started state, where the recording relationship determining unit is specifically configured to: determine, according to the placement status parameter acquired by the placement parameter acquiring unit, and the rear-facing photographing unit, determined by the photographing starting determining unit, in the started state, that the first audio sensor unit records a left sound channel and the second audio sensor unit records a right sound channel; or
if the current placement status of the terminal is a vertical-direction and upside-down state, the placement parameter acquiring unit acquires a current placement status parameter of the terminal, and the photographing starting determining unit determines that the rear-facing photographing unit is in the started state, where the recording relationship determining unit is specifically configured to: determine, according to the placement status parameter acquired by the placement parameter acquiring unit, and the rear-facing photographing unit, determined by the photographing starting determining unit, in the started state, that the first audio sensor unit records a right sound channel and the second audio sensor unit records a left sound channel.

With reference to the first possible implementation manner of the second aspect, in a fifth possible implementation manner of the second aspect, the at least two audio sensor units include a first audio sensor unit and a second audio sensor unit, where the first audio sensor unit and the second audio sensor unit are arranged symmetrically, with a transverse axis of the terminal being a central line.

With reference to the first possible implementation manner or the fifth possible implementation manner of the second aspect, in a sixth possible implementation manner of the second aspect,
when the at least one photographing unit is the front-facing photographing unit,
if the current placement status of the terminal is a transverse-direction and upside-up state, the placement parameter acquiring unit acquires a current placement status parameter of the terminal, and the photographing starting determining unit determines that the front-facing photographing unit is in the started state, where the recording relationship determining unit is specifically configured to: determine, according to the placement status parameter acquired by the placement parameter acquiring unit, and the front-facing photographing unit, determined by the photographing starting determining unit, in the started state, that the first audio sensor unit records a right sound channel and the second audio sensor unit records a left sound channel; or
if the current placement status of the terminal is a transverse-direction and upside-down state, the placement parameter acquiring unit acquires a current placement status parameter of the terminal, and the photographing starting determining unit determines that the front-facing photographing unit is in the started state, where the recording relationship determining unit is specifically configured to: determine, according to the placement status parameter acquired by the placement parameter acquiring unit, and the front-facing photographing unit, determined by the photographing starting determining unit, in the started state, that the first audio sensor unit records a left sound channel and the second audio sensor unit records a right sound channel.

With reference to the first possible implementation manner or the fifth possible implementation manner of the second aspect, in a seventh possible implementation manner of the second aspect,
when the at least one photographing unit is the rear-facing photographing unit,
if the current placement status of the terminal is a transverse-direction and upside-up state, the placement parameter acquiring unit acquires a current placement status parameter of the terminal, and the photographing starting determining unit determines that the rear-facing photographing unit is in the started state, where the recording relationship determining unit is specifically configured to: determine, according to the placement status parameter acquired by the placement parameter acquiring unit, and the rear-facing photographing unit, determined by the photographing starting determining unit, in the started state, that the first audio sensor unit records a left sound channel and the second audio sensor unit records a right sound channel; or
if the current placement status of the terminal is a transverse-direction and upside-down state, the placement parameter acquiring unit acquires a current placement status parameter of the terminal, and the photographing starting determining unit determines that the rear-facing photographing unit is in the started state, where the recording relationship determining unit is specifically configured to: determine, according to the placement status parameter acquired by the placement parameter acquiring unit, and the rear-facing photographing unit, determined by the photographing starting determining unit, in the started state, that the first audio sensor unit records a right sound channel and the second audio sensor unit records a left sound channel.

With reference to the second aspect or any implementation manner of the possible implementation manners of the second aspect, in an eighth possible implementation manner of the second aspect, the volume adjusting unit is specifically configured to:
adjust, according to a recording correspondence between the first audio sensor unit, the second audio sensor unit, and the two sound channels, volume of the first audio sensor unit and the second audio sensor unit to gradually increase both simultaneously, gradually decrease both simultaneously, or increase both to maximum simultaneously, so that the difference between the volume that passes through the two sound channels is less than the preset threshold.

With reference to the first possible implementation manner of the second aspect, in a ninth possible implementation manner of the second aspect, the at least one photographing unit includes the front-facing photographing unit and the rear-facing photographing unit; the apparatus further includes:
a location information acquiring unit, configured to acquire location information of a recording object;
the photographing starting determining unit is specifically configured to: determine, according to the location information that is of the recording object and acquired by the location information acquiring unit, that the front-facing photographing unit or the rear-facing photographing unit is in the started state; where
when the recording object is on a same side as a front surface of the terminal, the photographing starting determining unit determines that the front-facing photographing unit is in the started state; and when the recording object is on a same side as a rear surface of the terminal, the photographing starting determining unit determines that the rear-facing photographing unit is in the started state.

With reference to the ninth possible implementation manner of the second aspect, in a tenth possible implementation manner of the second aspect, the at least two audio sensor units are three audio sensor units; and
the recording relationship determining unit is specifically configured to:
   determine, according to the acquired placement status parameter, that the three audio sensor units are in a started state; and
   determine, according to the determined photographing unit in the started state, that two audio sensor units of the three audio sensor units record a right sound channel and one audio sensor unit records a left sound channel, or that two audio sensor units of the three audio sensor units record a left sound channel and one audio sensor unit records a right sound channel.

With reference to the tenth possible implementation manner of the second aspect, in an eleventh possible implementation manner of the second aspect, the volume adjusting unit is specifically configured to:
when it is determined that two audio sensor units of the three audio sensor units record the right sound channel and one audio sensor unit records the left sound channel, adjust combined volume of the two audio sensor units that record the right sound channel to gradually decrease the combined volume, and adjust volume of the one audio sensor unit that records the left sound channel to maximum or to gradually increase the volume, so that the difference between the volume that passes through the two sound channels is less than the preset threshold; or
when it is determined that two audio sensor units of the three audio sensor units record the left sound channel and one audio sensor unit records the right sound channel, adjust combined volume of the two audio sensor units that record the left sound channel to gradually decrease the combined volume, and adjust volume of the one audio sensor unit that records the right sound channel to maximum or to gradually increase the volume, so that the difference between the volume that passes through the two sound channels is less than the preset threshold.

According to a third aspect of the present invention, a recording terminal is provided, where the terminal includes two sound channels, at least two audio sensor units, at least one photographing unit, and the recording apparatus according to the second aspect or any implementation manner of the possible implementation manners of the second aspect. According to the recording method, apparatus, and terminal provided in the embodiments of the present invention, a current placement status parameter of a terminal is acquired according to current placement status of the terminal, and it is determined that one photographing unit of at least one photographing unit is in a started state; a recording correspondence between at least two audio sensor units and two sound channels is determined according to the acquired placement status parameter and the determined photographing unit in the started state; volume of the at least two audio sensor units is adjusted according to the recording correspondence, so that a difference between volume that passes through the two sound channels is less than a preset threshold. This manner of determining the recording correspondence between the at least two audio sensor units and the two sound channels according to the current placement status parameter of the terminal and the photographing unit in the started state, and then adjusting the volume of the at least two audio sensor units according to the recording correspondence, enables the volume that passes through the two sound channels to be almost the same, thereby producing a stereophonic effect corresponding to placement status of the terminal. Therefore, a problem that a stereophonic effect of a recorded video is poor as a result of a change in location status of the terminal is solved, thereby improving quality of video recording and improving user experience.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a recording method according to Embodiment 1 of the present invention;
FIG. 2 is an exemplary schematic diagram of a recording method according to Embodiment 1 of the present invention;
FIG. 3 is another exemplary schematic diagram of a recording method according to Embodiment 1 of the present invention;
FIG. 4 is another exemplary schematic diagram of a recording method according to Embodiment 1 of the present invention;
FIG. 5 is another exemplary schematic diagram of a recording method according to Embodiment 1 of the present invention;
FIG. 6 is another exemplary schematic diagram of a recording method according to Embodiment 1 of the present invention;
FIG. 7 is another exemplary schematic diagram of a recording method according to Embodiment 1 of the present invention;
FIG. 8 is another exemplary schematic diagram of a recording method according to Embodiment 1 of the present invention;
FIG. 9 is another exemplary schematic diagram of a recording method according to Embodiment 1 of the present invention;
FIG. 10 is another exemplary schematic diagram of a recording method according to Embodiment 1 of the present invention;
FIG. 11 is another exemplary schematic diagram of a recording method according to Embodiment 1 of the present invention;
FIG. 12 is a schematic structural diagram of a recording apparatus according to Embodiment 2 of the present invention;
FIG. 13 is another schematic structural diagram of a recording apparatus according to Embodiment 2 of the present invention;
FIG. 14 is another schematic structural diagram of a recording apparatus according to Embodiment 2 of the present invention;
FIG. 15 is a schematic structural diagram of a recording apparatus according to Embodiment 3 of the present invention;
FIG. 16 is a schematic structural diagram of a recording terminal according to Embodiment 4 of the present invention; and
FIG. 17 is a structural block diagram of a recording terminal by using a mobile phone as an example according to Embodiment 4 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

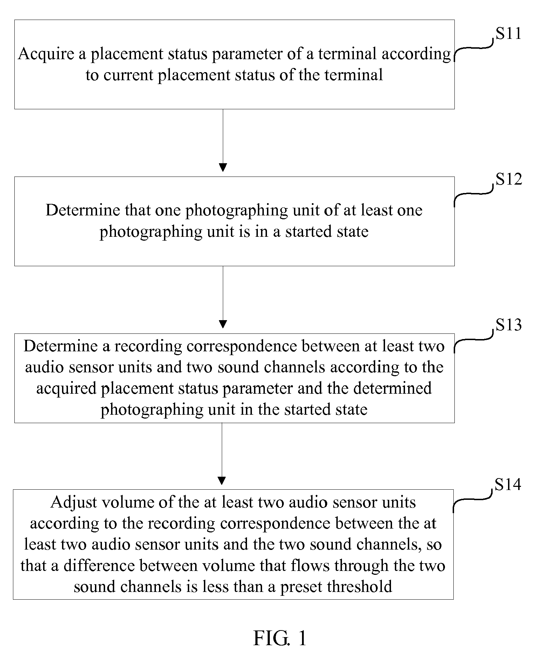

Embodiment 1 of the present invention provides a recording method. This embodiment of the present invention is described by using an example in which this method is applied to a terminal. The terminal includes two sound channels, at least two audio sensor units, and at least one photographing unit. The photographing unit needs to present a picture to a user after acquiring the picture; therefore, the terminal further includes a screen. As shown in FIG. 1, the method includes the following steps:
S 11. Acquire a placement status parameter of the terminal according to current placement status of the terminal.

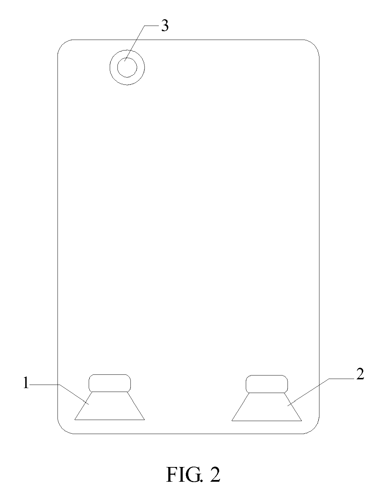

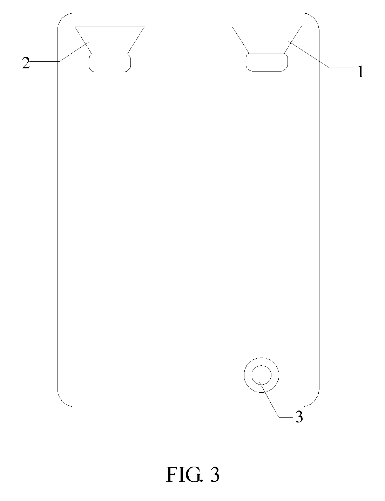

In this embodiment of the present invention, as shown in FIG. 2, placement status in which a user usually holds a terminal is used as a vertical-direction and upside-up state; as shown in FIG. 3, if the terminal in the vertical-direction and upside-up state is rotated by 180 degrees on a plane on which the terminal is located, the current placement status of the terminal may be considered as a vertical-direction and upside-down state; if the terminal in the vertical-direction and upside-up state is rotated by 90 degrees in a clockwise direction on the plane on which the terminal is located, the current placement status of the terminal may be considered as a transverse-direction and upside-up state; and if the terminal in this state is rotated by 300 degrees in a clockwise direction on the plane on which the terminal is located, the current placement status of the terminal may be considered as an inclined placement state. According to this classification idea, the placement status of the terminal may be classified into the vertical-direction and upside-up state, the vertical-direction and upside-down state, the transverse-direction and upside-up state, the transverse-direction and upside-down state, and the inclined placement state.

According to this classification of the placement status of the terminal, one placement state of the terminal is set as standard placement status, so that comparison may be performed on the terminal according to a deviation angle between the current placement status and the standard placement status, where an error is allowed for the deviation angle. For example, when standard status of the terminal is set to the vertical-direction and upside-up state, in this case, if a clockwise deviation angle between the current placement status of the terminal and the standard placement status is greater than 80 degrees and less than 100 degrees, the current placement status of the terminal may be considered as a transverse-direction and upside-up state; if a clockwise deviation angle between the current placement status of the terminal and the standard placement status is greater than 100 degrees and less than 170 degrees, the current placement status of the terminal may be considered as an inclined placement state; if a clockwise deviation angle between the current placement status of the terminal and the standard placement status is greater than 170 degrees and less than 190 degrees, the current placement status of the terminal may be considered as a vertical-direction and upside-down state. The above are merely examples of the deviation angle between the current placement status and the standard placement status, which is not limited in the present invention.

It should be noted that, in a specific application, an apparatus for acquiring the placement status parameter according to the current placement status of the terminal may be any one of apparatuses such as a gravitational acceleration sensor and a gyro sensor.

Specifically, when the apparatus for acquiring the placement status parameter is a gravitational acceleration sensor, the placement status parameter may be specifically a gravity sensing parameter (X, Y, Z) of the terminal, where X, Y, and Z indicate component values of gravitational accelerations generated by the terminal in an X-axis direction, a Y-axis direction, and a Z-axis direction, respectively. For example, when the terminal is currently in a vertical-direction and upside-up state, the gravity sensing parameter (X, Y, Z) may be (0, -10, 0); when the terminal is currently in a vertical-direction and upside-down state, the gravity sensing parameter (X, Y, Z) may be (0, 10, 0); when the terminal is currently in a transverse-direction and upside-up state, the gravity sensing parameter (X, Y, Z) may be (-10, 0, 0). It should be noted that, if an error is allowed for the deviation angle between the current placement status of the terminal and the specified standard placement status, a plurality of gravity sensing parameters may correspond to one placement state. For example, when an acquired gravity sensing parameter is (-1, -9, 1), it may be determined that the terminal is currently in the vertical-direction and upside-up state. A correspondence between a gravity sensing parameter and a placement state of a terminal may be set based on experience by a person skilled in the art, which is not limited in the present invention.

S12. Determine that one photographing unit of the at least one photographing unit is in a started state.

In this embodiment of the present invention, the number of photographing units arranged on the terminal may be more than one, and positions of the photographing units may be arranged randomly. For example, a surface having a screen of the terminal is referred to as a front surface of the terminal, a surface opposite to the front surface of the terminal is referred to as a rear surface of the terminal, and a plane perpendicular to the front surface of the terminal is referred to as a side surface of the terminal. In this case, a photographing unit may be arranged on the front surface of the terminal (a front-facing photographing unit); the photographing unit may also be arranged on the rear surface of the terminal (a rear-facing photographing unit); and certainly, the photographing unit may be further arranged on the side surface of the terminal. The number and positions of photographing units of the terminal are not specifically limited in the present invention.

In this embodiment of the present invention, that at least one photographing unit is arranged on the terminal may be that only one photographing unit is arranged on the terminal. For example, a front-facing photographing unit or a rear-facing photographing unit is arranged on the terminal.

That at least one photographing unit is arranged on the terminal may also be that two or more photographing units are arranged on the terminal. For example, a front-facing photographing unit and a rear-facing photographing unit are both arranged on the terminal. In the present invention, the photographing unit may be a camera or an apparatus that provides a photographing function.

After a recording function is enabled, no matter how many photographing units are arranged on the terminal, it is required to determine first that one photographing unit of the terminal is in the started state.

In another embodiment of the present invention, if the terminal includes a front-facing photographing unit and a rear-facing photographing unit, before it is determined whether the front-facing photographing unit or the rear-facing photographing unit is in a started state, location information of a recording object needs to be acquired first. Then, it is determined, according to the acquired location information of the recording object, that the front-facing photographing unit or the rear-facing photographing unit is in the started state. If the front surface of the terminal and the rear surface of the terminal that are described above are complied, when the recording object is on a same side as the front surface of the terminal, it is determined that the front-facing photographing unit is in the started state; when the recording object is on a same side as the rear surface of the terminal, it is determined that the rear-facing photographing unit is in the started state.

S13. Determine a recording correspondence between the at least two audio sensor units and the two sound channels according to the acquired placement status parameter and the determined photographing unit in the started state.

In this embodiment of the present invention, at least two audio sensor units are arranged on the terminal, where two audio sensor units or three or more audio sensor units may be arranged on the terminal. Generally, three or more audio sensor units are arranged on the terminal. If a cost is considered, two audio sensor units may also be arranged on the terminal; however, this arrangement is applicable to a situation where the current placement status of the terminal is the vertical-direction and upside-up state, the vertical-direction and upside-down state, the transverse-direction and upside-up state, and the transverse-direction and upside-down state, but a recording effect is not obvious when the current placement status of the terminal is the inclined placement state. It should be noted that, the number of audio sensor units arranged on the terminal is not limited in the present invention. In the present invention, the audio sensor unit may be a microphone or an apparatus that provides an audio transmission function.

The following describes in detail how the terminal determines the recording correspondence between the audio sensor units and the two sound channels according to the placement status parameter and the photographing unit in the started state in two cases in which two audio sensor units and three audio sensor units are arranged on the terminal.

In a first scenario of this embodiment of the present invention, two audio sensor units are arranged on the terminal: a first audio sensor unit and a second audio sensor unit separately. The first scenario may be specifically classified into the following eight cases according to different placement states of the terminal and the photographing unit in the started state.

Case 1: As shown in FIG. 2, a first audio sensor unit 1 and a second audio sensor unit 2 are arranged symmetrically, with a vertical axis of the terminal being a central line; a front-facing photographing unit 3 arranged on the terminal is in a started state; and the current placement status of the terminal is the vertical-direction and upside-up state.

In this case, when the current placement status of the terminal is the vertical-direction and upside-up state, a current placement status parameter of the terminal is acquired; then, according to the acquired placement status parameter and the determined front-facing photographing unit 3 in the started state, determining the recording correspondence between the audio sensor units and the two sound channels is specifically determining that the first audio sensor unit 1 records a right sound channel and the second audio sensor unit 2 records a left sound channel.

Specifically, that the placement status parameter is a gravity sensing parameter (X, Y, Z) is used as an example. According to a corresponding setting relationship between the placement status of the terminal and a gravity sensing parameter of the terminal, when an acquired current gravity sensing parameter of the terminal is (0, -10, 0), correspondingly, the current placement status of the terminal is the vertical-direction and upside-up state. In this case, it may be determined, according to the acquired gravity sensing parameter (0, -10, 0) and the front-facing photographing unit 3 in the started state, that the first audio sensor unit 1 records the right sound channel and the second audio sensor unit 2 records the left sound channel. Case 2: As shown in FIG. 3, a first audio sensor unit 1 and a second audio sensor unit 2 are arranged symmetrically, with a vertical axis of the terminal being a central line; a front-facing photographing unit 3 arranged on the terminal is in a started state; and the current placement status of the terminal is the vertical-direction and upside-down state.

In this case, when the current placement status of the terminal is the vertical-direction and upside-down state, a current placement status parameter of the terminal is acquired; then, according to the acquired placement status parameter and the determined front-facing photographing unit 3 in the started state, determining the recording correspondence between the audio sensor units and the two sound channels is specifically determining that the first audio sensor unit 1 records a left sound channel and the second audio sensor unit 2 records a right sound channel.

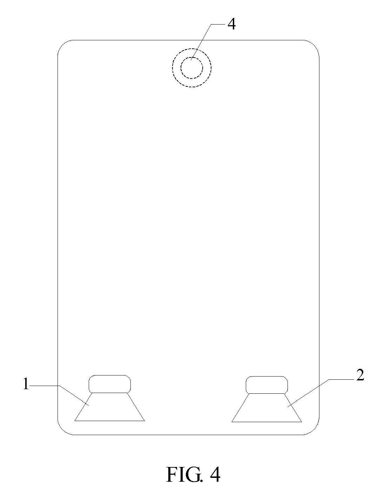

Specifically, that the placement status parameter is a gravity sensing parameter (X, Y, Z) is used as an example. According to a corresponding setting relationship between the placement status of the terminal and a gravity sensing parameter of the terminal, when an acquired current gravity sensing parameter of the terminal is (0, 10, 0), correspondingly, the current placement status of the terminal is the vertical-direction and upside-down state. In this case, it may be determined, according to the acquired gravity sensing parameter (0, 10, 0) and the front-facing photographing unit 3 in the started state, that the first audio sensor unit 1 records the left sound channel and the second audio sensor unit 2 records the right sound channel. Case 3: As shown in FIG. 4, a first audio sensor unit 1 and a second audio sensor unit 2 are arranged symmetrically, with a vertical axis of the terminal being a central line; a rear-facing photographing unit 4 arranged on the terminal is in a started state; and the current placement status of the terminal is the vertical-direction and upside-up state.

In this case, when the current placement status of the terminal is the vertical-direction and upside-up state, a current placement status parameter of the terminal is acquired; then, according to the acquired placement status parameter and the determined rear-facing photographing unit 4 in the started state, determining the recording correspondence between the audio sensor units and the two sound channels is specifically determining that the first audio sensor unit 1 records a left sound channel and the second audio sensor unit 2 records a right sound channel.

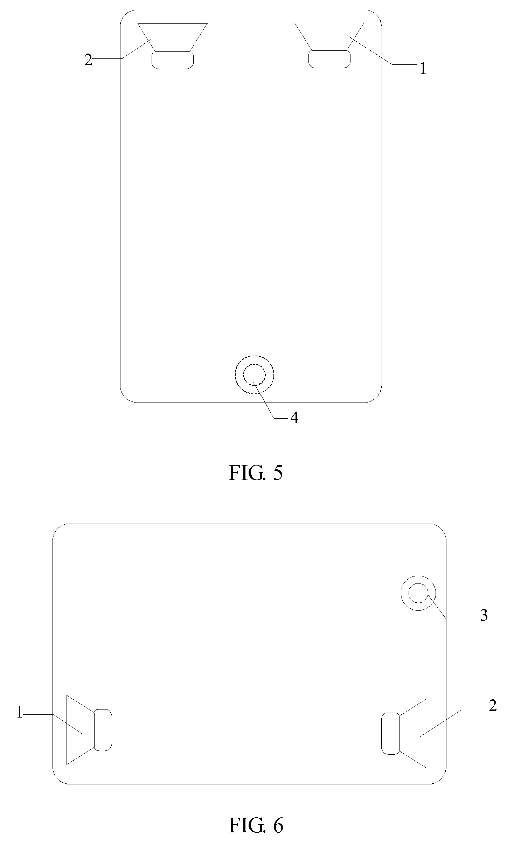

Specifically, that the placement status parameter is a gravity sensing parameter (X, Y, Z) is used as an example. According to a corresponding setting relationship between the placement status of the terminal and a gravity sensing parameter of the terminal, when an acquired current gravity sensing parameter of the terminal is (0, -10, 0), correspondingly, the current placement status of the terminal is the vertical-direction and upside-up state. In this case, it may be determined, according to the acquired gravity sensing parameter (0, -10, 0) and the rear-facing photographing unit 4 in the started state, that the first audio sensor unit 1 records the left sound channel and the second audio sensor unit 2 records the right sound channel. Case 4: As shown in FIG. 5, a first audio sensor unit 1 and a second audio sensor unit 2 are arranged symmetrically, with a vertical axis of the terminal being a central line; a rear-facing photographing unit 4 arranged on the terminal is in a started state; and the current placement status of the terminal is the vertical-direction and upside-down state.

In this case, when the current placement status of the terminal is the vertical-direction and upside-down state, a current placement status parameter of the terminal is acquired; then, according to the acquired placement status parameter and the determined rear-facing photographing unit 4 in the started state, determining the recording correspondence between the audio sensor units and the two sound channels is specifically determining that the first audio sensor unit 1 records a right sound channel and the second audio sensor unit 2 records a left sound channel.

Specifically, that the placement status parameter is a gravity sensing parameter (X, Y, Z) is used as an example. According to a corresponding setting relationship between the placement status of the terminal and a gravity sensing parameter of the terminal, when an acquired current gravity sensing parameter of the terminal is (0, 10, 0), correspondingly, the current placement state of the terminal is the vertical-direction and upside-down state. In this case, it may be determined, according to the acquired gravity sensing parameter (0, 10, 0) and the rear-facing photographing unit 4 in the started state, that the first audio sensor unit 1 records the right sound channel and the second audio sensor unit 2 records the left sound channel. Case 5: As shown in FIG. 6, a first audio sensor unit 1 and a second audio sensor unit 2 are arranged symmetrically, with a transverse axis of the terminal being a central line; a front-facing photographing unit 3 arranged on the terminal is in a started state; and the current placement status of the terminal is the transverse-direction and upside-up state.

In this case, when the current placement status of the terminal is the transverse-direction and upside-up state, a current placement status parameter of the terminal is acquired; then, according to the acquired placement status parameter and the determined front-facing photographing unit 3 in the started state, determining the recording correspondence between the audio sensor units and the two sound channels is specifically determining that the first audio sensor unit 1 records a right sound channel and the second audio sensor unit 2 records a left sound channel.

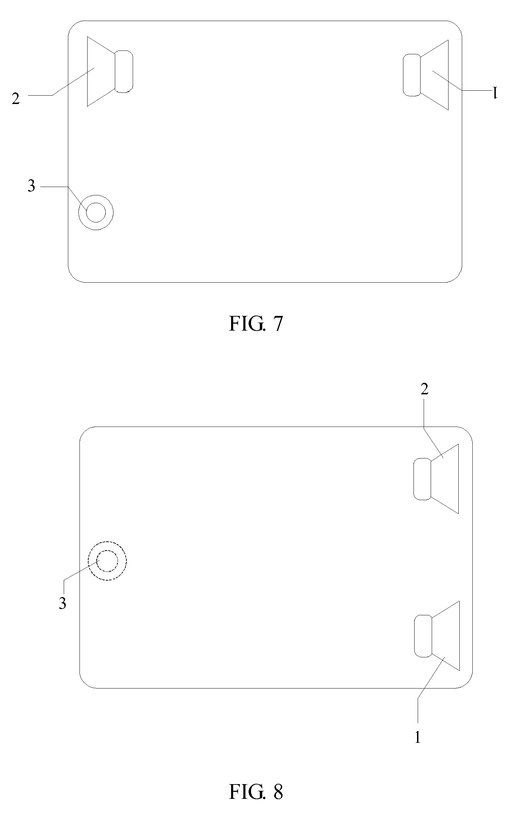

Specifically, that the placement status parameter is a gravity sensing parameter (X, Y, Z) is used as an example. According to a corresponding setting relationship between the placement status of the terminal and a gravity sensing parameter of the terminal, when an acquired current gravity sensing parameter of the terminal is (-10, 0, 0), correspondingly, the current placement status of the terminal is the transverse-direction and upside-up state. In this case, it may be determined, according to the acquired gravity sensing parameter (-10, 0, 0) and the front-facing photographing unit 3 in the started state, that the first audio sensor unit 1 records the right sound channel and the second audio sensor unit 2 records the left sound channel. Case 6: As shown in FIG. 7, a first audio sensor unit 1 and a second audio sensor unit 2 are arranged symmetrically, with a transverse axis of the terminal being a central line; a front-facing photographing unit 3 arranged on the terminal is in a started state; and the current placement status of the terminal is the transverse-direction and upside-down state.

In this case, when the current placement status of the terminal is the transverse-direction and upside-down state, a current placement status parameter of the terminal is acquired; then, according to the acquired placement status parameter and the determined front-facing photographing unit 3 in the started state, determining the recording correspondence between the audio sensor units and the two sound channels is specifically determining that the first audio sensor unit 1 records a left sound channel and the second audio sensor unit 2 records a right sound channel.

Specifically, that the placement status parameter is a gravity sensing parameter (X, Y, Z) is used as an example. According to a corresponding setting relationship between the placement status of the terminal and a gravity sensing parameter of the terminal, when an acquired current gravity sensing parameter of the terminal is (10, 0, 0), correspondingly, the current placement status of the terminal is the transverse-direction and upside-down state. In this case, it may be determined, according to the acquired gravity sensing parameter (10, 0, 0) and the front-facing photographing unit 3 in the started state, that the first audio sensor unit 1 records the left sound channel and the second audio sensor unit 2 records the right sound channel. Case 7: As shown in FIG. 8, a first audio sensor unit 1 and a second audio sensor unit 2 are arranged symmetrically, with a transverse axis of the terminal being a central line; a rear-facing photographing unit 4 arranged on the terminal is in a started state; and the current placement status of the terminal is the transverse-direction and upside-up state.

In this case, when the current placement status of the terminal is the transverse-direction and upside-up state, a current placement status parameter of the terminal is acquired; then, according to the acquired placement status parameter and the determined rear-facing photographing unit 4 in the started state, the recording correspondence between the audio sensor units and the two sound channels is specifically determining that the first audio sensor unit 1 records a left sound channel and the second audio sensor unit 2 records a right sound channel.

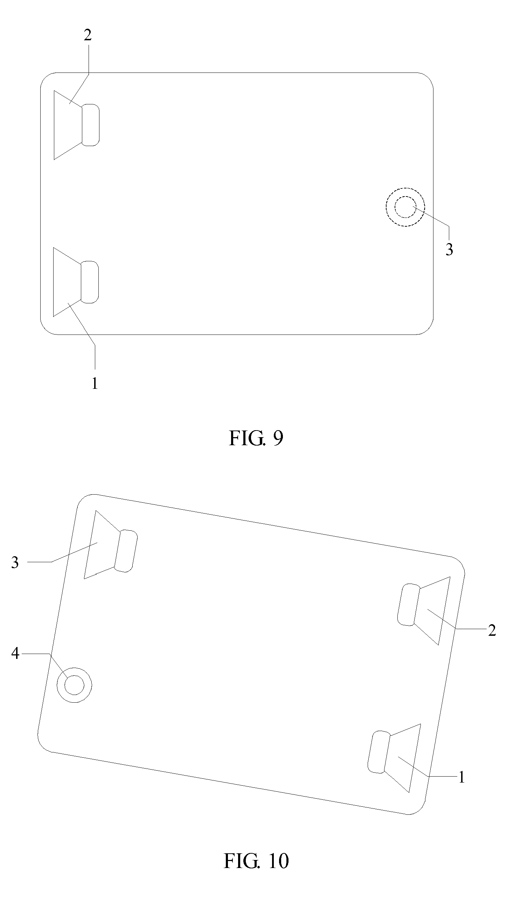

Specifically, that the placement status parameter is a gravity sensing parameter (X, Y, Z) is used as an example. According to a corresponding setting relationship between the placement status of the terminal and a gravity sensing parameter of the terminal, when an acquired current gravity sensing parameter of the terminal is (-10, 0, 0), correspondingly, the current placement status of the terminal is the transverse-direction and upside-up state. In this case, it may be determined, according to the acquired gravity sensing parameter (-10, 0, 0) and the rear-facing photographing unit 4 in the started state, that the first audio sensor unit 1 records the left sound channel and the second audio sensor unit 2 records the right sound channel. Case 8: As shown in FIG. 9, a first audio sensor unit 1 and a second audio sensor unit 2 are arranged symmetrically, with a transverse axis of the terminal being a central line; a rear-facing photographing unit 4 arranged on the terminal is in a started state; and the current placement state of the terminal is the transverse-direction and upside-down state.

In this case, when the current placement status of the terminal is the transverse-direction and upside-down state, a current placement status parameter of the terminal is acquired; then, according to the acquired placement status parameter and the determined rear-facing photographing unit 3 in the started state, determining the recording correspondence between the audio sensor units and the two sound channels is specifically determining that the first audio sensor unit 1 records a right sound channel and the second audio sensor unit 2 records a left sound channel.

Specifically, that the placement status parameter is a gravity sensing parameter (X, Y, Z) is used as an example. According to a corresponding setting relationship between the placement status of the terminal and a gravity sensing parameter of the terminal, when an acquired current gravity sensing parameter of the terminal is (10, 0, 0), correspondingly, the current placement status of the terminal is the transverse-direction and upside-down state. In this case, it may be determined, according to the acquired gravity sensing parameter (10, 0, 0) and the rear-facing photographing unit 4 in the started state, that the first audio sensor unit 1 records the right sound channel and the second audio sensor unit 2 records the left sound channel.

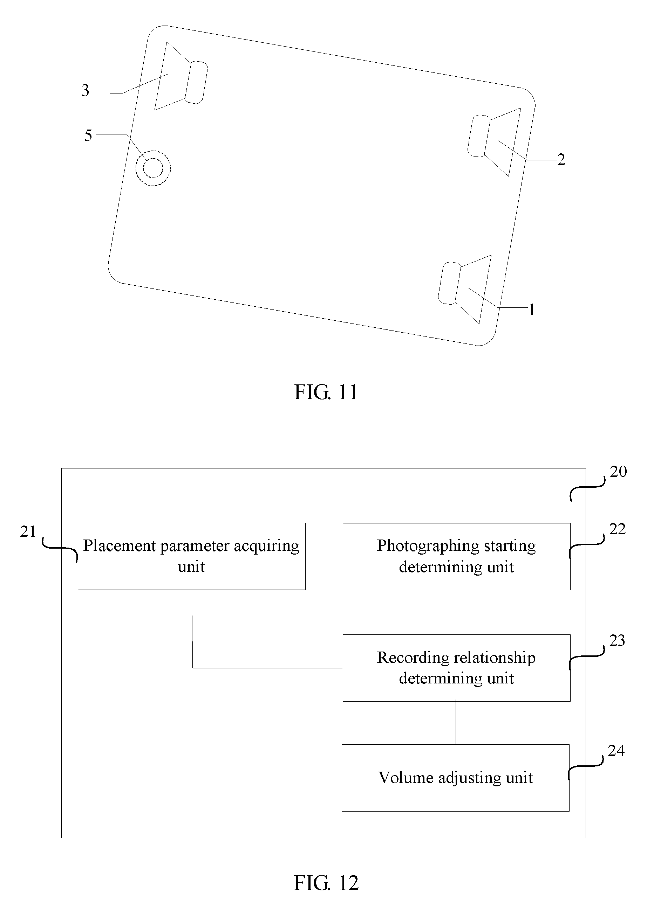

In a second scenario of this embodiment of the present invention, as shown in FIG. 10 and FIG. 11, three audio sensor units are arranged on the terminal, where a first audio sensor unit 1 and a second audio sensor unit 2 are arranged symmetrically, with a vertical axis of the terminal being a central line, and the second audio sensor unit 2 and a third audio sensor unit 3 are arranged symmetrically, with a transverse axis of the terminal being a central line. Determining the recording correspondence between the audio sensor units and the two sound channels is determined according to the placement status of the terminal and the determined photographing unit in the started state specifically includes the following two cases:
Case 1: As shown in FIG. 10, when the current placement status of the terminal is the inclined placement state, in order to acquire a better recording effect, it may be determined that the first audio sensor unit 1, the second audio sensor unit 2, and the third audio sensor unit 3 are all used; moreover, it may be determined, according to an acquired location of the recording object, that the photographing unit in the started state is a front-facing photographing unit 4.
   In this case, determining the recording correspondence between the audio sensor units and the two sound channels is specifically determining that the first audio sensor unit 1 and the second audio sensor unit 2 record a left sound channel, and the third audio sensor unit 3 records a right sound channel.
   Specifically, that the placement status parameter is a gravity sensing parameter (X, Y, Z) is used as an example. According to a corresponding setting relationship between the placement status of the terminal and a gravity sensing parameter of the terminal, when an acquired current gravity sensing parameter of the terminal is (-7, -1, 0), correspondingly, the current placement status of the terminal is the inclined placement state. In this case, it may be determined, according to the acquired gravity sensing parameter (-7, -1, 0) and the front-facing photographing unit 4 in the started state, that the first audio sensor unit 1 and the second audio sensor unit 2 record the left sound channel, and the third audio sensor unit 3 records the right sound channel.
Case 2: As shown in FIG. 11, when the current placement status of the terminal is the inclined placement state, in order to acquire a better recording effect, it may be determined that the first audio sensor unit 1, the second audio sensor unit 2, and the third audio sensor unit 3 are all used; moreover, it may be determined, according to an acquired location of the recording object, that the photographing unit in the started state is a rear-facing photographing unit 5. In this case, determining the recording correspondence between the audio sensor units and the two sound channels is specifically determining that the first audio sensor unit 1 and the second audio sensor unit 2 record a right sound channel, and the third audio sensor unit 3 records a left sound channel.

Specifically, that the placement status parameter is a gravity sensing parameter (X, Y, Z) is used as an example. According to a corresponding setting relationship between the placement status of the terminal and a gravity sensing parameter of the terminal, when an acquired current gravity sensing parameter of the terminal is (-7, -1, 0), correspondingly, the current placement status of the terminal is the inclined placement state. In this case, it may be determined, according to the acquired gravity sensing parameter (-7, -1, 0) and the rear-facing photographing unit 5 in the started state, that the first audio sensor unit 1 and the second audio sensor unit 2 record the right sound channel, and the third audio sensor unit 3 records the left sound channel.

S14. Adjust volume of the at least two audio sensor units according to the recording correspondence between the at least two audio sensor units and the two sound channels, so that a difference between volume that passes through the two sound channels is less than a preset threshold.

In this embodiment of the present invention, during volume adjustment, a difference may be allowed between the volume that passes through the two sound channels; however, in order to ensure a better stereophonic effect, the difference needs to be within the preset threshold.

The threshold may be set to 1 decibel, 5 decibels, or the like, and may be set by a person skilled in the art according to experience, which is not limited in the present invention. Specially, when the difference between the volume that passes through the two sound channels is zero, it means that the volume that passes through the two sound channels is equal.

In an embodiment of the present invention, two audio sensor units are arranged on the terminal; and after the recording correspondence between the audio sensor units and the sound channels is determined, volume of a first audio sensor unit and a second audio sensor unit may be adjusted to gradually increase simultaneously, gradually decrease simultaneously, or increase to maximum simultaneously, so that a difference between volume that passes through the two sound channels is less than the preset threshold.

In an embodiment of the present invention, three or more audio sensor units are arranged on the terminal; and after the recording correspondence between the audio sensor units and the sound channels is determined, volume of the audio sensor units is adjusted so that a difference between volume combined on the left sound channel and volume combined on the right sound channel by the audio sensor units is less than the preset threshold.

Specifically, when three audio sensor units are arranged on the terminal, and when it is determined that two audio sensor units of the three audio sensor units record the right sound channel and one audio sensor unit records the left sound channel, combined volume of the two audio sensor units that record the right sound channel is adjusted to gradually decrease, and volume of the one audio sensor unit that records the left sound channel is adjusted to maximum or to gradually increase, so that a difference between volume that passes through the two sound channels is less than the preset threshold; alternatively, when it is determined that two audio sensor units of the three audio sensor units record the left sound channel and one audio sensor unit records the right sound channel, combined volume of the two audio sensor units that record the left sound channel is adjusted to gradually decrease, and volume of the one audio sensor unit that records the right sound channel is adjusted to maximum or to gradually increase, so that a difference between volume that passes through the two sound channels is less than the preset threshold.

In the recording method according to Embodiment 1 of the present invention, a current placement status parameter of a terminal is acquired according to current placement status of the terminal, and it is determined that one photographing unit of at least one photographing unit of the terminal is in a started state; next, a recording correspondence between at least two audio sensor units and two sound channels is determined according to the acquired placement status parameter and the determined photographing unit in the started state; then, volume of the at least two audio sensor units is adjusted according to the recording correspondence, so that a difference between volume that passes through the two sound channels is less than a preset threshold. It can be seen from the above that, a manner of determining the recording correspondence between the at least two audio sensor units and the two sound channels according to the current placement status parameter of the terminal and the photographing unit in the started state, and then adjusting the volume of the at least two audio sensor units according to the recording correspondence, enables the volume that passes through the two sound channels to be almost the same, thereby producing a stereophonic effect corresponding to the placement status of the terminal. A problem that a stereophonic effect of a recorded video is poor as a result of a change in location status of the terminal is solved, thereby improving quality of video recording and improving user experience.

In an embodiment of the present invention, a recording correspondence between audio sensor units and the sound channels is determined according to the acquired placement status parameter and a camera in a started state, and the placement status parameter is determined according to the placement status of the terminal; therefore, a recording policy concerning the placement status of the terminal, the photographing unit in the started state, and the recording correspondence between the audio sensor units and the sound channels may be further configured and stored in the terminal. Accordingly, step 13 is specifically as follows: query the recording policy according to the acquired placement status parameter and the determined photographing unit in the started state, so as to determine a recording correspondence between the at least two audio sensor units and the two sound channels.

The recording policy in this embodiment of the present invention may be stored in a form of a recording correspondence table, as exemplified in Table 1. Table 1 is an example in this embodiment of the present invention. In Table 1, the recording policy concerning the placement status of the terminal, the photographing unit in the started state, and the recording correspondence between the audio sensor units and the sound channels is described by using an example in which the audio sensor units have a first audio sensor unit and a second audio sensor unit.

**Table 1**

| Placement status of a terminal | Photographing unit in a started state | Recording correspondence between audio sensor units and sound channels |
|---|---|---|
| Vertical-direction and upside-up state | Front-facing photographing unit | A first audio sensor unit records a right sound channel, and |
| | | a second audio sensor unit records a left sound channel |
| Vertical-direction and upside-down state | Front-facing photographing unit | A first audio sensor unit records a left sound channel, and |
| | | a second audio sensor unit records a right sound channel |
| Transverse-direction and upside-up state | Front-facing photographing unit | A first audio sensor unit records a right sound channel, and |
| | | a second audio sensor unit records a left sound channel |
| Transverse-direction and upside-down state | Front-facing photographing unit | A first audio sensor unit records a left sound channel, and |
| | | a second audio sensor unit records a right sound channel |
| Vertical-direction and upside-up state | Rear-facing photographing unit | A first audio sensor unit records a left sound channel, and |
| | | a second audio sensor unit records a right sound channel |
| Vertical-direction and upside-down state | Rear-facing photographing unit | A first audio sensor unit records a right sound channel, and |
| | | a second audio sensor unit records a left sound channel |
| Transverse-direction and upside-up state | Rear-facing photographing unit | A first audio sensor unit records a left sound channel, and |
| | | a second audio sensor unit records a right sound channel |
| Transverse-direction and upside-down state | Rear-facing photographing unit | A first audio sensor unit records a right sound channel, and |
| | | a second audio sensor unit records a left sound channel |

When the placement status of the terminal is the vertical-direction and upside-up state, if it is determined that the front-facing camera is in the started state, it may be obtained, from a table that is stored in the terminal and records the recording policy, that the first audio sensor unit records the right sound channel and the second audio sensor unit records the left sound channel.

In this way, after the recording policy is configured and stored in the terminal in advance, each time the current placement status of the terminal is acquired and a started photographing unit is determined, the recording correspondence between the audio sensor units and the sound channels may be directly acquired from a recording policy stored in the terminal, so that the terminal adjusts volume of the audio sensor units according to the acquired recording correspondence, so that a difference between volume that passes through the left and right sound channels is less than the preset threshold.

Correspondingly, Embodiment 2 of the present invention further provides a recording apparatus 20. This embodiment of the present invention is described by using an example in which this apparatus is applied to a terminal. The terminal includes two sound channels, at least two audio sensor units, and at least one photographing unit. As shown in FIG. 12, the apparatus includes:
a placement parameter acquiring unit 21, configured to acquire a placement status parameter of the terminal according to current placement status of the terminal;
a photographing starting determining unit 22, configured to determine that one photographing unit of the at least one photographing unit is in a started state;
a recording relationship determining unit 23, configured to determine a recording correspondence between the at least two audio sensor units and the two sound channels according to the placement status parameter acquired by the placement parameter acquiring unit 21, and the photographing unit, determined by the photographing starting determining unit 22, in the started state; and
a volume adjusting unit 24, configured to adjust volume of the at least two audio sensor units according to the recording correspondence that is determined by the recording relationship determining unit 23 and between the at least two audio sensor units and the two sound channels, so that a difference between volume that passes through the two sound channels is less than a preset threshold.

In the recording apparatus 20 according to Embodiment 2 of the present invention, a recording relationship determining unit 23 determines a recording correspondence between at least two audio sensor units and two sound channels according to a placement status parameter acquired by a placement parameter acquiring unit 21, and a photographing unit, determined by a photographing starting determining unit 22, in the started state, and an adjusting unit 24 adjusts volume of the at least two audio sensor units according to the recording correspondence, so that a difference between the volume that passes through the two sound channels is less than a preset threshold. This apparatus that determines the recording correspondence between the at least two audio sensor units and the two sound channels according to the current placement status parameter of the terminal and the photographing unit in the started state, and then adjusts the volume of the at least two audio sensor units according to the recording correspondence, enables the volume that passes through the two sound channels to be almost the same, thereby producing a stereophonic effect corresponding to placement status of the terminal. A problem that a stereophonic effect of a recorded video is poor as a result of a change in location status of the terminal is solved, thereby improving quality of video recording and improving user experience.

Optionally, in an embodiment of the present invention, the at least one photographing unit includes a front-facing photographing unit and/or a rear-facing photographing unit. In this case, the photographing starting determining unit 22 is specifically configured to: determine that the front-facing photographing unit or the rear-facing photographing unit is in a started state.

Further, in an embodiment of the present invention, the at least two audio sensor units include a first audio sensor unit and a second audio sensor unit, where the first audio sensor unit and the second audio sensor unit are arranged symmetrically, with a vertical axis of the terminal being a central line.

Further, in an embodiment of the present invention, when the at least one photographing unit is the front-facing photographing unit, if the current placement status of the terminal is a vertical-direction and upside-up state, the placement parameter acquiring unit 21 acquires a current placement status parameter of the terminal, and the photographing starting determining unit 22 determines that the front-facing photographing unit is in the started state. In this case, the recording relationship determining unit 23 is specifically configured to: determine, according to the placement status parameter acquired by the placement parameter acquiring unit 21, and the front-facing photographing unit, determined by the photographing starting determining unit 22, in the started state, that the first audio sensor unit records a right sound channel and the second audio sensor unit records a left sound channel.

Optionally, in an embodiment of the present invention, when the at least one photographing unit is the front-facing photographing unit, if the current placement status of the terminal is a vertical-direction and upside-down state, the placement parameter acquiring unit 21 acquires a current placement status parameter of the terminal, and the photographing starting determining unit 22 determines that the front-facing photographing unit is in the started state. In this case, the recording relationship determining unit 23 is specifically configured to: determine, according to the placement status parameter acquired by the placement parameter acquiring unit 21, and the front-facing photographing unit, determined by the photographing starting determining unit 22, in the started state, that the first audio sensor unit records a left sound channel and the second audio sensor unit records a right sound channel.

Optionally, in an embodiment of the present invention, when the at least one photographing unit is the rear-facing photographing unit, if the current placement status of the terminal is a vertical-direction and upside-up state, the placement parameter acquiring unit 21 acquires a current placement status parameter of the terminal, and the photographing starting determining unit 22 determines that the rear-facing photographing unit is in the started state. In this case, the recording relationship determining unit 23 is specifically configured to: determine, according to the placement status parameter acquired by the placement parameter acquiring unit 21, and the rear-facing photographing unit, determined by the photographing starting determining unit 22, in the started state, that the first audio sensor unit records a left sound channel and the second audio sensor unit records a right sound channel.

Optionally, in an embodiment of the present invention, when the at least one photographing unit is the rear-facing photographing unit, if the current placement status of the terminal is a vertical-direction and upside-down state, the placement parameter acquiring unit 21 acquires a current placement status parameter of the terminal, and the photographing starting determining unit 22 determines that the rear-facing photographing unit is in the started state. In this case, the recording relationship determining unit 23 is specifically configured to: determine, according to the placement status parameter acquired by the placement parameter acquiring unit 21, and the rear-facing photographing unit, determined by the photographing starting determining unit 22, in the started state, that the first audio sensor unit records a right sound channel and the second audio sensor unit records a left sound channel.

Optionally, in an embodiment of the present invention, the at least two audio sensor units include a first audio sensor unit and a second audio sensor unit, where the first audio sensor unit and the second audio sensor unit are arranged symmetrically, with a transverse axis of the terminal being a central line.

Further, in an embodiment of the present invention, when the at least one photographing unit is the front-facing photographing unit, if the current placement status of the terminal is a transverse-direction and upside-up state, the placement parameter acquiring unit 21 acquires a current placement status parameter of the terminal, and the photographing starting determining unit 22 determines that the front-facing photographing unit is in the started state. In this case, the recording relationship determining unit 23 is specifically configured to: determine, according to the placement status parameter acquired by the placement parameter acquiring unit 21, and the front-facing photographing unit, determined by the photographing starting determining unit 22, in the started state, that the first audio sensor unit records a right sound channel and the second audio sensor unit records a left sound channel.

Optionally, in an embodiment of the present invention, when the at least one photographing unit is the front-facing photographing unit, if the current placement status of the terminal is a transverse-direction and upside-down state, the placement parameter acquiring unit 21 acquires a current placement status parameter of the terminal, and the photographing starting determining unit 22 determines that the front-facing photographing unit is in the started state. In this case, the recording relationship determining unit 23 is specifically configured to: determine, according to the placement status parameter acquired by the placement parameter acquiring unit 21, and the front-facing photographing unit, determined by the photographing starting determining unit 22, in the started state, that the first audio sensor unit records a left sound channel and the second audio sensor unit records a right sound channel.

Optionally, in an embodiment of the present invention, the at least one photographing unit is the rear-facing photographing unit; if the current placement status of the terminal is a transverse-direction and upside-up state, the placement parameter acquiring unit 21 acquires a current placement status parameter of the terminal, and the photographing starting determining unit 22 determines that the rear-facing photographing unit is in the started state. In this case, the recording relationship determining unit 23 is specifically configured to: determine, according to the placement status parameter acquired by the placement parameter acquiring unit 21, and the rear-facing photographing unit, determined by the photographing starting determining unit 22, in the started state, that the first audio sensor unit records a left sound channel and the second audio sensor unit records a right sound channel.

Optionally, in an embodiment of the present invention, the at least one photographing unit is the rear-facing photographing unit; if the current placement status of the terminal is a transverse-direction and upside-down state, the placement parameter acquiring unit 21 acquires a current placement status parameter of the terminal, and the photographing starting determining unit 22 determines that the rear-facing photographing unit is in the started state. In this case, the recording relationship determining unit 23 is specifically configured to: determine, according to the placement status parameter acquired by the placement parameter acquiring unit 21, and the rear-facing photographing unit, determined by the photographing starting determining unit 22, in the started state, that the first audio sensor unit records a right sound channel and the second audio sensor unit records a left sound channel.

Optionally, based on the foregoing embodiments, in an embodiment of the present invention, the volume adjusting unit 24 is specifically configured to:
adjust, according to a recording correspondence between the first audio sensor unit, the second audio sensor unit, and the two sound channels, volume of the first audio sensor unit and the second audio sensor unit to gradually increase both simultaneously, gradually decrease both simultaneously, or increase both to maximum simultaneously, so that the difference between the volume that passes through the two sound channels is less than the preset threshold.

During volume adjustment, a difference may be allowed between the volume that passes through the two sound channels; however, in order to ensure a better stereophonic effect, the difference needs to be within the preset threshold. The threshold may be set to 1 decibel, 5 decibels, or the like, and may be set by a person skilled in the art according to experience, which is not limited in the present invention.

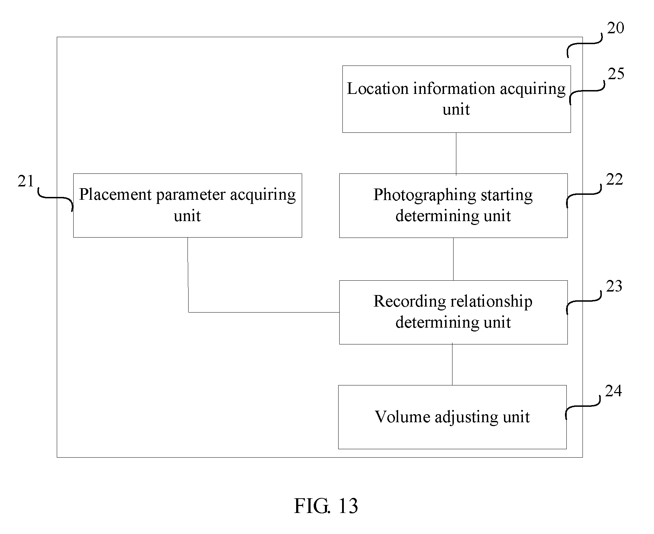

Optionally, in an embodiment of the present invention, the at least one photographing unit includes the front-facing photographing unit and the rear-facing photographing unit. As shown in FIG. 13, the apparatus 20 further includes:
a location information acquiring unit 25, configured to acquire location information of a recording object;
the photographing starting determining unit 22 is specifically configured to determine, according to the location information that is of the recording object and acquired by the location information acquiring unit 25, that the front-facing photographing unit or the rear-facing photographing unit is in the started state.

If a surface having a screen of the terminal is referred to as a front surface of the terminal, a surface opposite to the front surface of the terminal is referred to as a rear surface of the terminal, and a plane perpendicular to the front surface of the terminal is referred to as a side surface of the terminal, when the recording object is on a same side as the front surface of the terminal, the photographing starting determining unit 22 determines that the front-facing photographing unit is in the started state; and when the recording object is on a same side as the rear surface of the terminal, the photographing starting determining unit 22 determines that the rear-facing photographing unit is in the started state.

Further, in an embodiment of the present invention, the at least two audio sensor units are three audio sensor units.

In this case, the recording relationship determining unit 23 is specifically configured to:
determine, according to the placement status parameter acquired by the placement parameter acquiring unit 21, that the three audio sensor units are in a started state; and
determine, according to the determined photographing unit in the started state, that two audio sensor units of the three audio sensor units record a right sound channel and one audio sensor unit records a left sound channel, or that two audio sensor units of the three audio sensor units record a left sound channel and one audio sensor unit records a right sound channel.

Optionally, in an embodiment of the present invention, the volume adjusting unit 24 is specifically configured to:
when it is determined that two audio sensor units of the three audio sensor units record the right sound channel and one audio sensor unit records the left sound channel, adjust combined volume of the two audio sensor units that record the right sound channel to gradually decrease the combined volume, and adjust volume of the one audio sensor unit that records the left sound channel to maximum or to gradually increase the volume, so that the difference between volume that passes through the two sound channels is less than the preset threshold; or
when it is determined that two audio sensor units of the three audio sensor units record the left sound channel and one audio sensor unit records the right sound channel, adjust combined volume of the two audio sensor units that record the left sound channel to gradually decrease the combined volume, and adjust volume of the one audio sensor unit that records the right sound channel to the maximum or to gradually increase the volume, so that the difference between volume that passes through the two sound channels is less than the preset threshold.

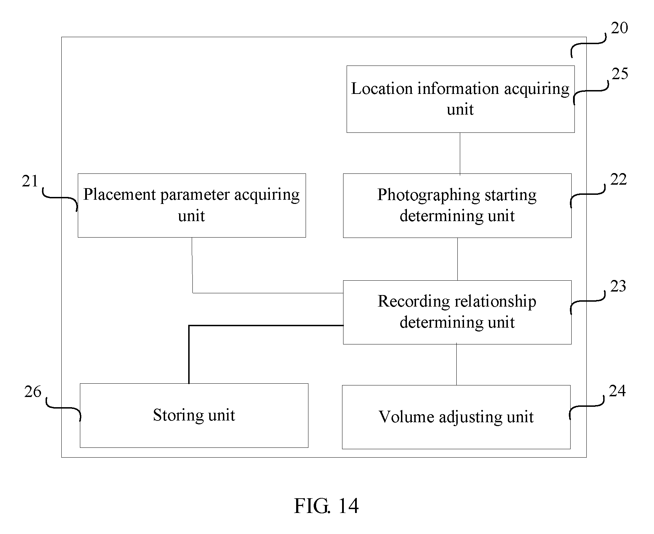

In an embodiment of the present invention, as shown in FIG. 14, the apparatus 20 further includes:
a storing unit 25, configured to store, in the terminal in advance, a recording policy of determining, according to placement status of the terminal and the photographing unit in the started state, the recording correspondence between the audio sensor units and the sound channels; and
the recording relationship determining unit 23 is configured to query the recording policy according to the placement status parameter acquired by the placement parameter acquiring unit, and the photographing unit, determined by the photographing starting determining unit, in the started state, so as to determine the recording correspondence between the at least two audio sensor units and the two sound channels.

The recording correspondence between the audio sensor units and the sound channels is determined according to the placement status parameter acquired by the placement parameter acquiring unit 21, and a camera, determined by the photographing starting determining unit 22, in the started state, and the placement status parameter is also determined according to the placement status of the terminal; therefore, a recording policy concerning the current placement status of the terminal, the photographing unit in the started state, and the recording correspondence between the audio sensor units and the sound channels may be further configured and stored in the storing unit 25 in advance.

It should be noted that, for specific functions of structural units of the recording apparatus 20 provided in this embodiment of the present invention, refer to the foregoing method embodiments.

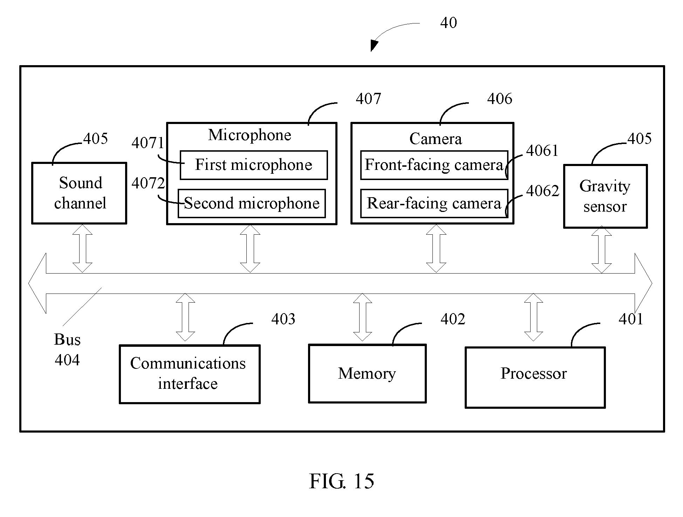

FIG. 15 shows another embodiment of a recording apparatus provided in the present invention. It should be understood that a recording apparatus 40 shown in the figure is merely an example of the recording apparatus, and the recording apparatus 40 may have more or fewer parts than parts shown in the figure, may combine two or more parts, or may have different part configurations. The parts shown in figure may be implemented in hardware, software, or a combination of hardware and software, including one or more signal processing circuits and/or application specific integrated circuits.

As shown in FIG. 15, the recording apparatus 40 provided in Embodiment 3 of the present invention includes a processor 401, a memory 402, a communications interface 403, a bus 404, a gravity sensor 405, a camera 406, a microphone 407, and a sound channel 408. The processor 401, the memory 402, the communications interface 403, the sensor 405, the camera 406, and the microphone 407 are connected and communicate with each other by using the bus 404. The bus 404 may be an Industry Standard Architecture (Industry Standard Architecture, ISA for short) bus, a Peripheral Component Interconnect (Peripheral Component, PCI for short) bus, an Extended Industry Standard Architecture (Extended Industry Standard Architecture, EISA for short) bus, or the like. The bus 404 may be classified into an address bus, a data bus, a control bus, and the like. For ease of denotation, the bus is represented by using only one thick line in FIG. 15; however, it does not indicate that there is only one bus or only one type of bus.

The gravity sensor 405 is configured to acquire a gravity sensing parameter of the apparatus according to current placement status of the apparatus.

The camera 406 includes but is not limited to a front-facing camera 4061 and/or a rear-facing camera 4062.

The memory 402 is configured to store executable program code, where the program code includes a computer operation instruction. The memory 402 may include a high-speed RAM memory, or may include a non-volatile memory (non-volatile memory), such as at least one disk memory. The memory 402 may be accessed by the processor 401, the communications interface 403, and the like.

The processor 401 runs, by reading the executable program code stored in the memory 402, a program corresponding to the executable program code, so as to:
determine that one camera of at least one camera 406 is in a started state;
determine a recording correspondence between at least two microphones 407 and two sound channels 408 according to the gravity sensing parameter acquired by the gravity sensor 405, and the determined camera 406 in the started state; and
adjust volume of the at least two microphones 407 according to the recording correspondence between the at least two microphones 407 and the two sound channels 408, so that a difference between volume that passes through the two sound channels 408 is less than a preset threshold.

Optionally, in an embodiment of the present invention, the memory 402 may be further configured to store a recording policy concerning placement status of the apparatus, the camera in the started state, and a recording correspondence between microphones and sound channels, where the placement status of the apparatus may be specifically obtained by using the gravity sensing parameter detected by the gravity sensor. For example, after the recording policy is stored in the memory 402, when the gravity sensing parameter acquired by the gravity sensor 405 is (-1, -9, 1), in this case, the current placement status of the apparatus is a vertical-direction and upside-up state. If it is determined that a front-facing camera is in the started state, it may be queried from the memory 402 that a first microphone 4071 records a right sound channel and a second microphone 4072 records a left sound channel.

In this case, the processor 401 may be further configured to query the recording policy according to the placement status parameter of the apparatus and the determined camera 406 in the started state, so as to determine the recording correspondence between the at least two microphones 407 and the two sound channels 408.

Optionally, in an embodiment of the present invention, the number of cameras 406 may be more than one, and positions of the cameras 406 may be arranged randomly. For example, a surface having a screen of the apparatus is referred to as a front surface of the apparatus, a surface opposite to the front surface of the apparatus is referred to as a rear surface of the apparatus, and a plane perpendicular to the front surface of the apparatus is referred to as a side surface of the apparatus. In this case, the camera 406 may be arranged on the front surface of the apparatus (the front-facing camera 4061); the camera 406 may also be arranged on the rear surface of the apparatus (the rear-facing camera 4062); and certainly, the camera 406 may be further arranged on the side surface of the apparatus. In this case, the camera 406 is specifically configured to determine that the front-facing camera 4061 or the rear-facing camera 4062 is in a started state.

Further, in an embodiment of the present invention, the microphone 407 includes a first microphone 4071 and a second microphone 4072, where the first microphone 4071 and the second microphone 4072 are arranged symmetrically, with a vertical axis of the apparatus being a central line.

In an embodiment of the present invention, when the camera 406 is the front-facing camera 4061, if the current placement status of the apparatus is a vertical-direction and upside-up state, the gravity sensor 405 acquires a current gravity sensing parameter of the apparatus, and it is determined that the front-facing camera 4061 is in the started state.

In this case, the processor 401 is specifically configured to: determine, according to the gravity sensing parameter acquired by the gravity sensor 405, and the front-facing camera, that the first microphone 4071 records a right sound channel and the second microphone 4072 records a left sound channel.

Further, in an embodiment of the present invention, when the camera 406 is the front-facing camera 4061, if the current placement status of the apparatus is a vertical-direction and upside-up state, the gravity sensor 405 acquires a current gravity sensing parameter of the apparatus, and it is determined that the front-facing camera 4061 is in the started state.

In this case, the processor 401 is specifically configured to: determine, according to the gravity sensing parameter acquired by the gravity sensor 405, and the front-facing camera 4061 in the started state, that the first microphone 4071 records a right sound channel and the second microphone 4072 records a left sound channel.

Optionally, in an embodiment of the present invention, when the camera 406 is the front-facing camera 4061, if the current placement status of the apparatus is a vertical-direction and upside-down state, the gravity sensor 405 acquires a current gravity sensing parameter of the apparatus, and it is determined that the front-facing camera 4061 is in the started state.

In this case, the processor 401 is specifically configured to: determine, according to the gravity sensing parameter acquired by the gravity sensor 405, and the front-facing camera 4061 in the started state, that the first microphone 4071 records a left sound channel and the second microphone 4072 records a right sound channel.

Optionally, in an embodiment of the present invention, when the camera 406 is the rear-facing camera 4062, if the current placement status of the apparatus is a vertical-direction and upside-up state, the gravity sensor 405 acquires a current gravity sensing parameter of the apparatus, and it is determined that the rear-facing camera 4062 is in the started state.

In this case, the processor 401 is specifically configured to: determine, according to the gravity sensing parameter acquired by the gravity sensor 405, and the rear-facing camera 4062 in the started state, that the first microphone 4071 records a left sound channel and the second microphone 4072 records a right sound channel.

Optionally, in an embodiment of the present invention, when the camera 406 is the rear-facing camera 4062, if the current placement status of the apparatus is a vertical-direction and upside-down state, the gravity sensor 405 acquires a current gravity sensing parameter of the apparatus, and it is determined that the rear-facing camera 4062 is in the started state.

In this case, the processor 401 is specifically configured to: determine, according to the gravity sensing parameter acquired by the gravity sensor 405, and the determined rear-facing camera 4062 in the started state, that the first microphone 4071 records the right sound channel and the second microphone 4072 records a left sound channel.

Optionally, in an embodiment of the present invention, the microphone 407 includes a first microphone 4071 and a second microphone 4072, where the first microphone 4071 and the second microphone 4072 are arranged symmetrically, with a transverse axis of the apparatus being a central line.

Further, in an embodiment of the present invention, when the camera 406 is the front-facing camera 4061, if the current placement status of the apparatus is a transverse-direction and upside-up state, the gravity sensor 405 acquires a current gravity sensing parameter of the apparatus, and it is determined that the front-facing camera 4061 is in the started state.

In this case, the processor 401 is specifically configured to: determine, according to the gravity sensing parameter acquired by the gravity sensor 405, and the determined front-facing camera 4061 in the started state, that the first microphone 4071 records a right sound channel and the second microphone 4072 records a left sound channel.

Optionally, in an embodiment of the present invention, when the camera 406 is the front-facing camera 4061, if the current placement status of the apparatus is a transverse-direction and upside-down state, the gravity sensor 405 acquires a current gravity sensing parameter of the apparatus, and it is determined that the front-facing camera 4061 is in the started state.

In this case, the processor 401 is specifically configured to: determine, according to the gravity sensing parameters acquired by the gravity sensor 405, and the determined front-facing camera 4061 in the started state, that the first microphone 4071 records a left sound channel and the second microphone 4072 records a right sound channel.

Optionally, in an embodiment of the present invention, when the camera 406 is the rear-facing camera 4062, if the current placement status of the apparatus is a transverse-direction and upside-up state, the gravity sensor 405 acquires a current gravity sensing parameter of the apparatus, and it is determined that the rear-facing camera 4062 is in the started state.

In this case, the processor 401 is specifically configured to: determine, according to the gravity sensing parameter acquired by the gravity sensor 405, and the determined rear-facing camera 4062 in the started state, that the first microphone 4071 records a left sound channel and the second microphone 4072 records a right sound channel.

Optionally, in an embodiment of the present invention, when the camera 406 is the rear-facing camera 4062, if the current placement status of the apparatus is a transverse-direction and upside-down state, the gravity sensor 405 acquires a current gravity sensing parameter of the apparatus, and it is determined that the rear-facing camera 4062 is in the started state.

In this case, the processor 401 is specifically configured to: determine, according to the gravity sensing parameter acquired by the gravity sensor 405, and the determined rear-facing camera 4062 in the started state, that the first microphone 4071 records a right sound channel and the second microphone 4072 records a left sound channel.

Optionally, based on the foregoing embodiments, in an embodiment of the present invention, the processor 401is specifically configured to:
adjust, according to a recording correspondence between the first microphone 4071, the second microphone 4072, and the two sound channels, volume of the first microphone 4071 and the second microphone 4072 to gradually increase both simultaneously, gradually decrease both simultaneously, or increase both to maximum simultaneously, so that the difference between the volume that passes through the two sound channels is less than the preset threshold.

During volume adjustment, a difference may be allowed between the volume that passes through the two sound channels; however, in order to ensure a better stereophonic effect, the difference needs to be within the preset threshold. The threshold may be set to 1 decibel, 5 decibels, or the like, and may be set by a person skilled in the art according to experience, which is not limited in the present invention.

Optionally, in an embodiment of the present invention, the camera 406 may include a front-facing camera 4061 and a rear-facing camera 4062. The processor 401 is further configured to acquire location information of a recording object.

In this case, the camera 406 is specifically configured to determine, according to the location information that is acquired by the processor 401 and of the recording object, that the front-facing camera 4061 or the rear-facing camera 4062 is in the started state.

If a surface having a screen of the apparatus is referred to as a front surface of the apparatus, a surface opposite to the front surface of the apparatus is referred to as a rear surface of the apparatus, and a plane perpendicular to the front surface of the apparatus is referred to as a side surface of the apparatus, when the recording object is on a same side as the front surface of the apparatus, it is determined that the front-facing camera 4061 is in the started state, and when the recording object is on a same side as the rear surface of the apparatus, it is determined that the rear-facing camera 4062 is in the started state.

Further, in an embodiment of the present invention, the microphone 407 has three microphones. In this case, the processor 401 is specifically configured to:
determine, according to an acquired gravity sensing parameter, that the three microphones 407 are started; and
determine, according to the camera 406 in the started state, that two microphones of the microphones 407 record a right sound channel and one microphone records a left sound channel, or that two microphones of the microphones 407 record a left sound channel and one microphone records a right sound channel.

Optionally, in an embodiment of the present invention, the processor 401 is specifically configured to:
when it is determined that two microphones of the microphones 407 record the right sound channel and one microphone records the left sound channel, adjust combined volume of the two microphones that record the right sound channel to gradually decrease the combined volume, and adjust volume of the one microphone that records the left sound channel to maximum or to gradually increase the volume, so that a difference between volume that passes through the two sound channels is less than a preset threshold; or
when it is determined that two microphones of the microphones 407 record the left sound channel and one microphone records the right sound channel, adjust combined volume of the two microphones that record the left sound channel to gradually decrease the combined volume, and adjust volume of the one microphone that records the right sound channel to maximum or to gradually increase the volume, so that a difference between volume that passes through the two sound channels is less than a preset threshold.

The processor 401 may be a central processing unit (Central Processing Unit, CPU for short), or an application specific integrated circuit (Application Specific Integrated Circuit, ASIC for short), or be configured as one or more integrated circuits implementing the embodiments of the present invention.

It should be noted that the processor 401, in addition to providing the foregoing functions, may be further configured to implement other procedures in the method embodiments, and details are not described repeatedly herein.

It should be further noted that, for division of functional units in the processor 401, reference may be made to the foregoing embodiments of the recording apparatus, which is not described repeatedly herein.

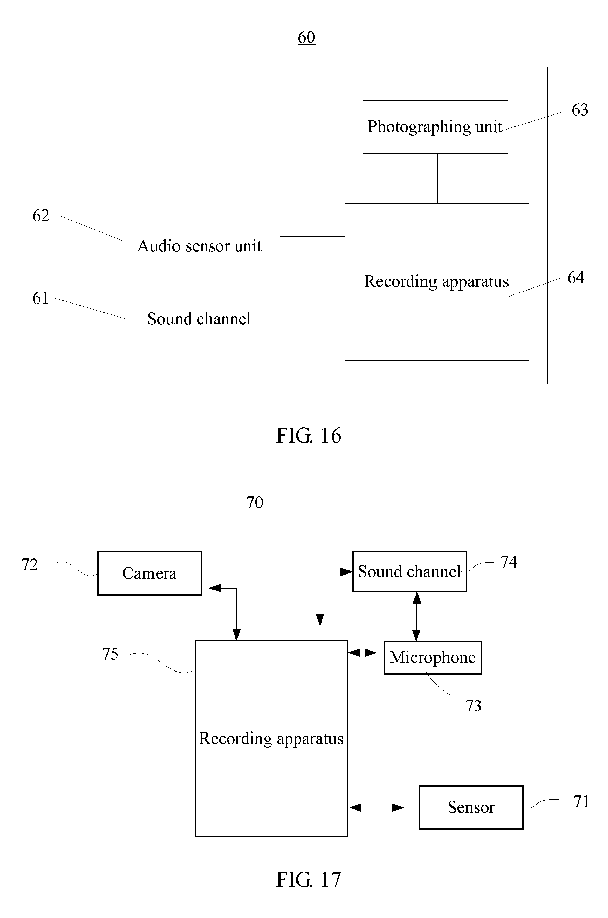

Correspondingly, Embodiment 4 of the present invention provides a terminal 60. As shown in FIG. 16, the terminal includes two sound channels 61, at least two audio sensor units 62, at least one photographing unit 63, and the recording apparatus 64 according to any embodiment of the embodiments of the recording apparatus.

In this embodiment of the present invention, the terminal may be specifically a mobile phone, a tablet computer, a camera device, a video camera, a personal digital assistant, or the like.

A mobile phone is used as an example of the terminal. FIG. 17 shows a block diagram of a partial structure of a mobile phone 70 related to the terminal provided in this embodiment of the present invention. As shown in FIG. 7, the mobile phone 70 includes modules such as a sensor 71, a camera 72, a microphone 73, a sound channel 74, and a recording apparatus 75. The sensor 71 acquires a placement parameter according to current placement status of the terminal, and sends the parameter to the recording apparatus 75. At the same time, the camera 72 also sends information about a determined camera in a started state to the recording apparatus 75. The recording apparatus 75 acquires, according to the received placement parameter and the camera 72 in a started state, a recording correspondence between the microphone 73 and the sound channel 74 from a recording policy that is stored inside, so that one sound channel corresponds to at least one microphone. Moreover, the recording apparatus 75 records volume that is of the microphones 73 and adjusted according to the recording policy, so that a difference between volume that passes through two sound channels 74 is less than a preset threshold.

A person skilled in the art may understand that a structure of the mobile phone shown in FIG. 17 does not constitute any limitation to the mobile phone, and instead the mobile phone may include parts fewer or more than those shown in the figure, or combine some parts, or have different part configurations.

Although not shown, the mobile phone 70 may further include an audio circuit, a speaker, a power supply module, and the like, which is not described herein.

The embodiments in this specification are all described in a progressive manner, for same or similar parts in the embodiments, reference may be made to these embodiments, and each embodiment focuses on a difference from other embodiments. Especially, an apparatus embodiment is basically similar to a method embodiment, and therefore is described briefly; for related parts, reference may be made to partial descriptions in the method embodiment.

It should be noted that the described apparatus embodiment is merely exemplary. The units described as separate parts may or may not be physically separate, and parts displayed as units may or may not be physical units, may be located in one position, or may be distributed on a plurality of network units. Some or all of the modules may be selected according to actual needs to achieve the objectives of the solutions of the embodiments. In addition, in the accompanying drawings of the apparatus embodiments provided by the present invention, connection relationships between modules indicate that the modules have communication connections with each other, which may be specifically implemented as one or more communications buses or signal cables. A person of ordinary skill in the art may understand and implement the embodiments of the present invention without creative efforts.

Based on the foregoing descriptions of the embodiments, a person skilled in the art may clearly understand that the present invention may be implemented by software in addition to necessary universal hardware or by dedicated hardware only, including an application specific integrated circuit, a dedicated CPU, a dedicated memory, a dedicated component and the like. Generally, any functions that can be performed by a computer program can be easily implemented by using corresponding hardware. Moreover, a specific hardware structure used to achieve a same function may be of various forms, for example, in a form of an analog circuit, a digital circuit, a dedicated circuit, or the like. However, as for the present invention, software program implementation is a better implementation manner in most cases. Based on such an understanding, the technical solutions of the present invention essentially or the part contributing to the prior art may be implemented in a form of a software product. The software product is stored in a readable storage medium, such as a floppy disk, a USB flash drive, a removable hard disk, a read-only memory (ROM, Read-Only Memory), a random access memory (RAM, Random Access Memory), a magnetic disk, or an optical disc of a computer, and includes several instructions for instructing a computer device (which may be a personal computer, a server, a network device, and the like) to perform the methods described in the embodiments of the present invention.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A recording method, wherein the method is applied to a terminal that comprises two sound channels, at least two audio sensor units, and at least one photographing unit, and the method comprises:
acquiring a placement status parameter of the terminal according to current placement status of the terminal, wherein the placement status parameter includes vertical-direction and upside-up state, vertical-direction and upside-down state, transverse-direction and upside-up state, transverse-direction and upside-down state, or inclined placement state;
determining that one photographing unit of the at least one photographing unit is in a started state;
determining a recording correspondence between the at least two audio sensor units and the two sound channels according to the acquired placement status parameter and the determined photographing unit in the started state; and
adjusting volume of the at least two audio sensor units according to the recording correspondence between the at least two audio sensor units and the two sound channels, so that a difference between volume that passes through the two sound channels is less than a preset threshold;
wherein the method further comprises:
storing a recording policy of determining, according to placement status of the terminal and the photographing unit in the started state, the recording correspondence between the audio sensor units and the sound channels; and
the determining a recording correspondence between the at least two audio sensor units and the two sound channels according to the acquired placement status parameter and the determined photographing unit in the started state is specifically: querying the recording policy according to the acquired placement status parameter and the determined photographing unit in the started state, so as to determine the recording correspondence between the at least two audio sensor units and the two sound channels.

2. The method according to claim 1, wherein:
the at least one photographing unit comprises a front-facing photographing unit and/or a rear-facing photographing unit; and
the determining that one photographing unit of the at least one photographing unit is in a started state is specifically: determining that the front-facing photographing unit or the rear-facing photographing unit is in a started state.

3. The method according to claim 2, wherein:
the at least two audio sensor units comprise a first audio sensor unit and a second audio sensor unit, wherein the first audio sensor unit and the second audio sensor unit are arranged symmetrically, with a vertical axis of the terminal being a central line.

4. The method according to claim 2 or 3, wherein the method comprises:
when the at least one photographing unit is the front-facing photographing unit,
if the current placement status of the terminal is a vertical-direction and upside-up state, acquiring a current placement status parameter of the terminal, and determining that the front-facing photographing unit is in the started state, wherein the determining a recording correspondence between the at least two audio sensor units and the two sound channels according to the acquired placement status parameter and the determined photographing unit in the started state is specifically: determining, according to the acquired placement status parameter and the determined front-facing photographing unit in the started state, that the first audio sensor unit records a right sound channel and the second audio sensor unit records a left sound channel; or
if the current placement status of the terminal is a vertical-direction and upside-down state, acquiring a current placement status parameter of the terminal, and determining that the front-facing photographing unit is in the started state, wherein the determining a recording correspondence between the at least two audio sensor units and the two sound channels according to the acquired placement status parameter and the determined photographing unit in the started state is specifically: determining, according to the acquired placement status parameter and the determined front-facing photographing unit in the started state, that the first audio sensor unit records a left sound channel and the second audio sensor unit records a right sound channel.

5. The method according to claim 2 or 3, wherein the method comprises:
when the at least one photographing unit is the rear-facing photographing unit,
if the current placement status of the terminal is a vertical-direction and upside-up state, acquiring a current placement status parameter of the terminal, and determining that the rear-facing photographing unit is in the started state, wherein the determining a recording correspondence between the at least two audio sensor units and the two sound channels according to the acquired placement status parameter and the determined photographing unit in the started state is specifically: determining, according to the acquired placement status parameter and the determined rear-facing photographing unit in the started state, that the first audio sensor unit records a left sound channel and the second audio sensor unit records a right sound channel; or
if the current placement status of the terminal is a vertical-direction and upside-down state, acquiring a current placement status parameter of the terminal, and determining that the rear-facing photographing unit is in the started state, wherein the determining a recording correspondence between the at least two audio sensor units and the two sound channels according to the acquired placement status parameter and the determined photographing unit in the started state is specifically: determining, according to the acquired placement status parameter and the determined rear-facing photographing unit in the started state, that the first audio sensor unit records a right sound channel and the second audio sensor unit records a left sound channel.

6. The method according to claim 2, wherein:
the at least two audio sensor units comprise a first audio sensor unit and a second audio sensor unit, wherein the first audio sensor unit and the second audio sensor unit are arranged symmetrically, with a transverse axis of the terminal being a central line.

7. The method according to claim 2 or 6, wherein the method comprises:
when the at least one photographing unit is the front-facing photographing unit,
if the current placement status of the terminal is a transverse-direction and upside-up state, acquiring a current placement status parameter of the terminal, and determining that the front-facing photographing unit is in the started state, wherein the determining a recording correspondence between the at least two audio sensor units and the two sound channels according to the acquired placement status parameter and the determined photographing unit in the started state is specifically: determining, according to the acquired placement status parameter and the determined front-facing photographing unit in the started state, that the first audio sensor unit records a right sound channel and the second audio sensor unit records a left sound channel; or
if the current placement status of the terminal is a transverse-direction and upside-down state, acquiring a current placement status parameter of the terminal, and determining that the front-facing photographing unit is in the started state, wherein the determining a recording correspondence between the at least two audio sensor units and the two sound channels according to the acquired placement status parameter and the determined photographing unit in the started state is specifically: determining, according to the acquired placement status parameter and the determined front-facing photographing unit in the started state, that the first audio sensor unit records a left sound channel and the second audio sensor unit records a right sound channel.

8. The method according to claim 2 or 6, wherein the method comprises:
when the at least one photographing unit is the rear-facing photographing unit,
if the current placement status of the terminal is a transverse-direction and upside-up state, acquiring a current placement status parameter of the terminal, and determining that the rear-facing photographing unit is in the started state, wherein the determining a recording correspondence between the at least two audio sensor units and the two sound channels according to the acquired placement status parameter and the determined photographing unit in the started state is specifically: determining, according to the acquired placement status parameter and the determined rear-facing photographing unit in the started state, that the first audio sensor unit records a left sound channel and the second audio sensor unit records a right sound channel; or
if the current placement status of the terminal is a transverse-direction and upside-down state, acquiring a current placement status parameter of the terminal, and determining that the rear-facing photographing unit is in the started state, wherein the determining a recording correspondence between the at least two audio sensor units and the two sound channels according to the acquired placement status parameter and the determined photographing unit in the started state is specifically: determining, according to the acquired placement status parameter and the rear-facing photographing unit in the started state, that the first audio sensor unit records a right sound channel and the second audio sensor unit records a left sound channel.

9. The method according to any one of claims 3 to 8, wherein the adjusting volume of the at least two audio sensor units according to the recording correspondence between the at least two audio sensor units and the two sound channels, so that a difference between volume that passes through the two sound channels is less than a preset threshold comprises:
adjusting, according to a recording correspondence between the first audio sensor unit, the second audio sensor unit, and the two sound channels, volume of the first audio sensor unit and the second audio sensor unit to gradually increase both simultaneously, gradually decrease both simultaneously, or increase both to maximum simultaneously, so that the difference between the volume that passes through the two sound channels is less than the preset threshold.

10. The method according to claim 2, wherein: the at least one photographing unit comprises the front-facing photographing unit and the rear-facing photographing unit;
before the determining that one photographing unit of the at least one photographing unit is in a started state, the method further comprises:
acquiring location information of a recording object;
the determining that one photographing unit of the at least one photographing unit is in a started state is specifically: determining, according to the acquired location information of the recording object, that the front-facing photographing unit or the rear-facing photographing unit is in the started state; wherein
when the recording object is on a same side as a front surface of the terminal, determining that the front-facing photographing unit is in the started state; and when the recording object is on a same side as a rear surface of the terminal, determining that the rear-facing photographing unit is in the started state.

11. The method according to claim 10, wherein:
the at least two audio sensor units are three audio sensor units; and
the determining a recording correspondence between the at least two audio sensor units and the two sound channels according to the acquired placement status parameter and the determined photographing unit in the started state comprises:
determining, according to the acquired placement status parameter, that the three audio sensor units are in a started state; and
determining, according to the determined photographing unit in the started state, that two audio sensor units of the three audio sensor units record a right sound channel and one audio sensor unit records a left sound channel, or that two audio sensor units of the three audio sensor units record a left sound channel and one audio sensor unit records a right sound channel.

12. The method according to claim 11, wherein the adjusting volume of the at least two audio sensor units according to the recording correspondence between the at least two audio sensor units and the two sound channels, so that a difference between volume that passes through the two sound channels is less than a preset threshold comprises:
when it is determined that two audio sensor units of the three audio sensor units record the right sound channel and one audio sensor unit records the left sound channel, adjusting combined volume of the two audio sensor units that record the right sound channel to gradually decrease the combined volume, and adjusting volume of the one audio sensor unit that records the left sound channel to maximum or to gradually increase the volume, so that the difference between the volume that passes through the two sound channels is less than the preset threshold; or
when it is determined that two audio sensor units of the three audio sensor units record the left sound channel and one audio sensor unit records the right sound channel, adjusting combined volume of the two audio sensor units that record the left sound channel to gradually decrease the combined volume, and adjusting volume of the one audio sensor unit that records the right sound channel to maximum or to gradually increase the volume, so that the difference between the volume that passes through the two sound channels is less than the preset threshold.

13. A recording apparatus, wherein the apparatus is applied to a terminal that comprises two sound channels, at least two audio sensor units, and at least one photographing unit, and the apparatus comprises:
a placement parameter acquiring unit, configured to acquire a placement status parameter of the terminal according to current placement status of the terminal, wherein the placement status parameter includes vertical-direction and upside-up state, vertical-direction and upside-down state, transverse-direction and upside-up state, transverse-direction and upside-down state, or inclined placement state;
a photographing starting determining unit, configured to determine that one photographing unit of the at least one photographing unit is in a started state;
a recording relationship determining unit, configured to determine a recording correspondence between the at least two audio sensor units and the two sound channels according to the placement status parameter acquired by the placement parameter acquiring unit, and the photographing unit, determined by the photographing starting determining unit, in the started state; and
a volume adjusting unit, configured to adjust volume of the at least two audio sensor units according to the recording correspondence that is determined by the recording relationship determining unit and between the at least two audio sensor units and the two sound channels, so that a difference between volume that passes through the two sound channels is less than a preset threshold;
wherein the apparatus further comprises:
a storing unit, configured to store, in the terminal in advance, a recording policy of determining, according to current placement status of the terminal and the determined photographing unit in the started state, the recording correspondence between the audio sensor units and the sound channels; and
the recording relationship determining unit is further configured to query the recording policy according to the placement status parameter acquired by the placement parameter acquiring unit, and the photographing unit, determined by the photographing starting determining unit, in the started state, so as to determine the recording correspondence between the at least two audio sensor units and the two sound channels.

14. The apparatus according to claim 13, wherein:
the at least one photographing unit comprises a front-facing photographing unit and/or a rear-facing photographing unit; and
the photographing starting determining unit is specifically configured to: determine that the front-facing photographing unit or the rear-facing photographing unit is in a started state.

15. The apparatus according to claim 14, wherein:
the at least two audio sensor units comprise a first audio sensor unit and a second audio sensor unit, wherein the first audio sensor unit and the second audio sensor unit are arranged symmetrically, with a vertical axis of the terminal being a central line.

16. The apparatus according to claim 14 or 15, wherein:
when the at least one photographing unit is the front-facing photographing unit,
if the current placement status of the terminal is a vertical-direction and upside-up state, the placement parameter acquiring unit acquires a current placement status parameter of the terminal, and the photographing starting determining unit determines that the front-facing photographing unit is in the started state, wherein the recording relationship determining unit is specifically configured to: determine, according to the placement status parameter acquired by the placement parameter acquiring unit, and the front-facing photographing unit, determined by the photographing starting determining unit, in the started state, that the first audio sensor unit records a right sound channel and the second audio sensor unit records a left sound channel; or
if the current placement status of the terminal is a vertical-direction and upside-down state, the placement parameter acquiring unit acquires a current placement status parameter of the terminal, and the photographing starting determining unit determines that the front-facing photographing unit is in the started state, wherein the recording relationship determining unit is specifically configured to: determine, according to the placement status parameter acquired by the placement parameter acquiring unit, and the front-facing photographing unit, determined by the photographing starting determining unit, in the started state, that the first audio sensor unit records a left sound channel and the second audio sensor unit records a right sound channel.

17. The apparatus according to claim 14 or 15, wherein:
when the at least one photographing unit is the rear-facing photographing unit,
if the current placement status of the terminal is a vertical-direction and upside-up state, the placement parameter acquiring unit acquires a current placement status parameter of the terminal, and the photographing starting determining unit determines that the rear-facing photographing unit is in the started state, wherein the recording relationship determining unit is specifically configured to: determine, according to the placement status parameter acquired by the placement parameter acquiring unit, and the rear-facing photographing unit, determined by the photographing starting determining unit, in the started state, that the first audio sensor unit records a left sound channel and the second audio sensor unit records a right sound channel; or
if the current placement status of the terminal is a vertical-direction and upside-down state, the placement parameter acquiring unit acquires a current placement status parameter of the terminal, and the photographing starting determining unit determines that the rear-facing photographing unit is in the started state, wherein the recording relationship determining unit is specifically configured to: determine, according to the placement status parameter acquired by the placement parameter acquiring unit, and the rear-facing photographing unit, determined by the photographing starting determining unit, in the started state, that the first audio sensor unit records a right sound channel and the second audio sensor unit records a left sound channel.

18. The apparatus according to claim 14, wherein:
the at least two audio sensor units comprise a first audio sensor unit and a second audio sensor unit, wherein the first audio sensor unit and the second audio sensor unit are arranged symmetrically, with a transverse axis of the terminal being a central line.

19. The apparatus according to claim 14 or 18, wherein:
when the at least one photographing unit is the front-facing photographing unit,
if the current placement status of the terminal is a transverse-direction and upside-up state, the placement parameter acquiring unit acquires a current placement status parameter of the terminal, and the photographing starting determining unit determines that the front-facing photographing unit is in the started state, wherein the recording relationship determining unit is specifically configured to: determine, according to the placement status parameter acquired by the placement parameter acquiring unit, and the front-facing photographing unit, determined by the photographing starting determining unit, in the started state, that the first audio sensor unit records a right sound channel and the second audio sensor unit records a left sound channel; or
if the current placement status of the terminal is a transverse-direction and upside-down state, the placement parameter acquiring unit acquires a current placement status parameter of the terminal, and the photographing starting determining unit determines that the front-facing photographing unit is in the started state, wherein the recording relationship determining unit is specifically configured to: determine, according to the placement status parameter acquired by the placement parameter acquiring unit, and the front-facing photographing unit, determined by the photographing starting determining unit, in the started state, that the first audio sensor unit records a left sound channel and the second audio sensor unit records a right sound channel.

20. The apparatus according to claim 14 or 18, wherein:
when the at least one photographing unit is the rear-facing photographing unit,
if the current placement status of the terminal is a transverse-direction and upside-up state, the placement parameter acquiring unit acquires a current placement status parameter of the terminal, and the photographing starting determining unit determines that the rear-facing photographing unit is in the started state, wherein the recording relationship determining unit is specifically configured to: determine, according to the placement status parameter acquired by the placement parameter acquiring unit, and the rear-facing photographing unit, determined by the photographing starting determining unit, in the started state, that the first audio sensor unit records a left sound channel and the second audio sensor unit records a right sound channel; or
if the current placement status of the terminal is a transverse-direction and upside-down state, the placement parameter acquiring unit acquires a current placement status parameter of the terminal, and the photographing starting determining unit determines that the rear-facing photographing unit is in the started state, wherein the recording relationship determining unit is specifically configured to: determine, according to the placement status parameter acquired by the placement parameter acquiring unit, and the rear-facing photographing unit, determined by the photographing starting determining unit, in the started state, that the first audio sensor unit records a right sound channel and the second audio sensor unit records a left sound channel.

21. The apparatus according to any one of claims 15 to 20, wherein the volume adjusting unit is specifically configured to:
adjust, according to a recording correspondence between the first audio sensor unit, the second audio sensor unit, and the two sound channels, volume of the first audio sensor unit and the second audio sensor unit to gradually increase both simultaneously, gradually decrease both simultaneously, or increase both to maximum simultaneously, so that the difference between the volume that passes through the two sound channels is less than the preset threshold.

22. The apparatus according to claim 14, wherein the at least one photographing unit comprises the front-facing photographing unit and the rear-facing photographing unit; the apparatus further comprises:
a location information acquiring unit, configured to acquire location information of a recording object;
the photographing starting determining unit is specifically configured to: determine, according to the location information that is of the recording object and acquired by the location information acquiring unit, that the front-facing photographing unit or the rear-facing photographing unit is in the started state, wherein:
when the recording object is on a same side as a front surface of the terminal, the photographing starting determining unit determines that the front-facing photographing unit is in the started state; and when the recording object is on a same side as a rear surface of the terminal, the photographing starting determining unit determines that the rear-facing photographing unit is in the started state.

23. The apparatus according to claim 22, wherein:
the at least two audio sensor units are three audio sensor units; and
the recording relationship determining unit is specifically configured to:
determine, according to the acquired placement status parameter, that the three audio sensor units are in a started state; and
determine, according to the determined photographing unit in the started state, that two audio sensor units of the three audio sensor units record a right sound channel and one audio sensor unit records a left sound channel, or that two audio sensor units of the three audio sensor units record a left sound channel and one audio sensor unit records a right sound channel.

24. The apparatus according to claim 23, wherein the volume adjusting unit is specifically configured to:
when it is determined that two audio sensor units of the three audio sensor units record the right sound channel and one audio sensor unit records the left sound channel, adjust combined volume of the two audio sensor units that record the right sound channel to gradually decrease the combined volume, and adjust volume of the one audio sensor unit that records the left sound channel to maximum or to gradually increase the volume, so that the difference between the volume that passes through the two sound channels is less than the preset threshold; or
when it is determined that two audio sensor units of the three audio sensor units record the left sound channel and one audio sensor unit records the right sound channel, adjust combined volume of the two audio sensor units that record the left sound channel to gradually decrease the combined volume, and adjust volume of the one audio sensor unit that records the right sound channel to maximum or to gradually increase the volume, so that the difference between the volume that passes through the two sound channels is less than the preset threshold.

25. A recording terminal, wherein the terminal comprises two sound channels, at least two audio sensor units, at least one photographing unit, and the recording apparatus according to any one of claims 13 to 24.

## Patentansprüche

1. Aufzeichnungsverfahren, wobei das Verfahren auf ein Endgerät angewendet wird, das zwei Tonkanäle, wenigstens zwei Audiosensoreinheiten und wenigstens eine Photographieeinheit umfasst, und das Verfahren Folgendes umfasst:
Erfassen eines Platzierungszustandsparameters des Endgeräts gemäß dem aktuellen Platzierungszustand des Endgeräts, wobei der Platzierungszustandsparameter Vertikalrichtungs- und Oberseite-nach-oben-Zustand, Vertikalrichtungs- und Oberseite-nach-unten-Zustand, Querrichtungs- und Oberseite-nach-oben-Zustand, Querrichtungs- und Oberseite-nach-unten-Zustand oder geneigten Platzierungszustand enthält;
Bestimmen, dass eine Photographieeinheit aus der wenigstens einen Photographieeinheit in einem gestarteten Zustand ist;
Bestimmen einer Aufzeichnungsbeziehung zwischen den wenigstens zwei Audiosensoreinheiten und den zwei Tonkanälen gemäß dem erfassten Platzierungszustandsparameter und der bestimmten Photographieeinheit in dem gestarteten Zustand; und
Einstellen der Lautstärke der wenigstens zwei Audiosensoreinheiten gemäß der Aufzeichnungsbeziehung zwischen den wenigstens zwei Audiosensoreinheiten und den zwei Tonkanälen, so dass eine Differenz zwischen der Lautstärke, die durch die zwei Tonkanäle hindurch tritt, kleiner als ein voreingestellter Schwellenwert ist;
wobei das Verfahren ferner Folgendes umfasst:
Speichern einer Aufzeichnungsstrategie zum Bestimmen, gemäß dem Platzierungszustand des Endgeräts und der Photographieeinheit in dem gestarteten Zustand, der Aufzeichnungsbeziehung zwischen den Audiosensoreinheiten und den Tonkanälen; und
das Bestimmen einer Aufzeichnungsbeziehung zwischen den wenigstens zwei Audiosensoreinheiten und den zwei Tonkanälen gemäß dem erfassten Platzierungszustandsparameter und der bestimmten Photographieeinheit in dem gestarteten Zustand insbesondere Folgendes ist: Abfragen der Aufzeichnungsstrategie gemäß dem erfassten Platzierungszustandsparameter und der bestimmten Photographieeinheit in dem gestarteten Zustand, um die Aufzeichnungsbeziehung zwischen den wenigstens zwei Audiosensoreinheiten und den zwei Tonkanälen zu bestimmen.

2. Verfahren nach Anspruch 1, wobei:
die wenigstens eine Photographieeinheit eine vorderseitige Photographieeinheit und/oder eine rückseitige Photographieeinheit umfasst; und
das Bestimmen, dass eine Photographieeinheit aus der wenigstens einen Photographieeinheit in einem gestarteten Zustand ist, insbesondere Folgendes ist: Bestimmen, dass die vorderseitige Photographieeinheit oder die rückseitige Photographieeinheit in einem gestarteten Zustand ist.

3. Verfahren nach Anspruch 2, wobei:
die wenigstens zwei Audiosensoreinheiten eine erste Audiosensoreinheit und eine zweite Audiosensoreinheit umfassen, wobei die erste Audiosensoreinheit und die zweite Audiosensoreinheit symmetrisch angeordnet sind, wobei eine vertikale Achse des Endgeräts eine Mittellinie ist.

4. Verfahren nach Anspruch 2 oder 3, wobei das Verfahren Folgendes umfasst:
wenn die wenigstens eine Photographieeinheit die vorderseitige Photographieeinheit ist,
falls der aktuelle Platzierungszustand des Endgeräts ein Vertikalrichtungs- und Oberseite-nach-oben-Zustand ist, Erfassen eines aktuellen Platzierungszustandsparameters des Endgeräts und Bestimmen, dass die vorderseitige Photographieeinheit in dem gestarteten Zustand ist, wobei das Bestimmen einer Aufzeichnungsbeziehung zwischen den wenigstens zwei Audiosensoreinheiten und den zwei Tonkanälen gemäß dem erfassten Platzierungszustandsparameter und der bestimmten Photographieeinheit in dem gestarteten Zustand insbesondere Folgendes ist: Bestimmen gemäß dem erfassten Platzierungszustandsparameter und der bestimmten vorderseitigen Photographieeinheit in dem gestarteten Zustand, dass die erste Audiosensoreinheit einen rechten Tonkanal aufzeichnet und die zweite Audiosensoreinheit einen linken Tonkanal aufzeichnet; oder
falls der aktuelle Platzierungszustand des Endgeräts ein Vertikalrichtungs- und Oberseite-nach-unten-Zustand ist, Erfassen eines aktuellen Platzierungszustandsparameters des Endgeräts und Bestimmen, dass die vorderseitige Photographieeinheit in dem gestarteten Zustand ist, wobei das Bestimmen einer Aufzeichnungsbeziehung zwischen den wenigstens zwei Audiosensoreinheiten und den zwei Tonkanälen gemäß dem erfassten Platzierungszustandsparameter und der bestimmten Photographieeinheit in dem gestarteten Zustand insbesondere Folgendes ist: Bestimmen gemäß dem erfassten Platzierungszustandsparameter und der bestimmten vorderseitigen Photographieeinheit in dem gestarteten Zustand, dass die erste Audiosensoreinheit einen linken Tonkanal aufzeichnet und die zweite Audiosensoreinheit einen rechten Tonkanal aufzeichnet.

5. Verfahren nach Anspruch 2 oder 3, wobei das Verfahren Folgendes umfasst:
wenn die wenigstens eine Photographieeinheit die rückseitige Photographieeinheit ist,
falls der aktuelle Platzierungszustand des Endgeräts ein Vertikalrichtungs- und Oberseite-nach-oben-Zustand ist, Erfassen eines aktuellen Platzierungszustandsparameters des Endgeräts und Bestimmen, dass die rückseitige Photographieeinheit in dem gestarteten Zustand ist, wobei das Bestimmen einer Aufzeichnungsbeziehung zwischen den wenigstens zwei Audiosensoreinheiten und den zwei Tonkanälen gemäß dem erfassten Platzierungszustandsparameter und der bestimmten Photographieeinheit in dem gestarteten Zustand insbesondere Folgendes ist: Bestimmen gemäß dem erfassten Platzierungszustandsparameter und der bestimmten rückseitigen Photographieeinheit in dem gestarteten Zustand, dass die erste Audiosensoreinheit einen linken Tonkanal aufzeichnet und die zweite Audiosensoreinheit einen rechten Tonkanal aufzeichnet; oder
falls der aktuelle Platzierungszustand des Endgeräts ein Vertikalrichtungs- und Oberseite-nach-unten-Zustand ist, Erfassen eines aktuellen Platzierungszustandsparameters des Endgeräts und Bestimmen, dass die rückseitige Photographieeinheit in dem gestarteten Zustand ist, wobei das Bestimmen einer Aufzeichnungsbeziehung zwischen den wenigstens zwei Audiosensoreinheiten und den zwei Tonkanälen gemäß dem erfassten Platzierungszustandsparameter und der bestimmten Photographieeinheit in dem gestarteten Zustand insbesondere Folgendes ist: Bestimmen gemäß dem erfassten Platzierungszustandsparameter und der bestimmten rückseitigen Photographieeinheit in dem gestarteten Zustand, dass die erste Audiosensoreinheit einen rechten Tonkanal aufzeichnet und die zweite Audiosensoreinheit einen linken Tonkanal aufzeichnet.

6. Verfahren nach Anspruch 2, wobei:
die wenigstens zwei Audiosensoreinheiten eine erste Audiosensoreinheit und eine zweite Audiosensoreinheit umfassen, wobei die erste Audiosensoreinheit und die zweite Audiosensoreinheit symmetrisch angeordnet sind, wobei eine Querachse des Endgeräts eine Mittellinie ist.

7. Verfahren nach Anspruch 2 oder 6, wobei das Verfahren Folgendes umfasst:
wenn die wenigstens eine Photographieeinheit die vorderseitige Photographieeinheit ist,
falls der aktuelle Platzierungszustand des Endgeräts ein Querrichtungs- und Oberseite-nach-oben-Zustand ist, Erfassen eines aktuellen Platzierungszustandsparameters des Endgeräts und Bestimmen, dass die vorderseitige Photographieeinheit in dem gestarteten Zustand ist, wobei das Bestimmen einer Aufzeichnungsbeziehung zwischen den wenigstens zwei Audiosensoreinheiten und den zwei Tonkanälen gemäß dem erfassten Platzierungszustandsparameter und der bestimmten Photographieeinheit in dem gestarteten Zustand insbesondere Folgendes ist: Bestimmen gemäß dem erfassten Platzierungszustandsparameter und der bestimmten vorderseitigen Photographieeinheit in dem gestarteten Zustand, dass die erste Audiosensoreinheit einen rechten Tonkanal aufzeichnet und die zweite Audiosensoreinheit einen linken Tonkanal aufzeichnet; oder
falls der aktuelle Platzierungszustand des Endgeräts ein Querrichtungs- und Oberseite-nach-unten-Zustand ist, Erfassen eines aktuellen Platzierungszustandsparameters des Endgeräts und Bestimmen, dass die vorderseitige Photographieeinheit in dem gestarteten Zustand ist, wobei das Bestimmen einer Aufzeichnungsbeziehung zwischen den wenigstens zwei Audiosensoreinheiten und den zwei Tonkanälen gemäß dem erfassten Platzierungszustandsparameter und der bestimmten Photographieeinheit in dem gestarteten Zustand insbesondere Folgendes ist: Bestimmen gemäß dem erfassten Platzierungszustandsparameter und der bestimmten vorderseitigen Photographieeinheit in dem gestarteten Zustand, dass die erste Audiosensoreinheit einen linken Tonkanal aufzeichnet und die zweite Audiosensoreinheit einen rechten Tonkanal aufzeichnet.

8. Verfahren nach Anspruch 2 oder 6, wobei das Verfahren Folgendes umfasst:
wenn die wenigstens eine Photographieeinheit die rückseitige Photographieeinheit ist,
falls der aktuelle Platzierungszustand des Endgeräts ein Querrichtungs- und Oberseite-nach-oben-Zustand ist, Erfassen eines aktuellen Platzierungszustandsparameters des Endgeräts und Bestimmen, dass die rückseitige Photographieeinheit in dem gestarteten Zustand ist, wobei das Bestimmen einer Aufzeichnungsbeziehung zwischen den wenigstens zwei Audiosensoreinheiten und den zwei Tonkanälen gemäß dem erfassten Platzierungszustandsparameter und der bestimmten Photographieeinheit in dem gestarteten Zustand insbesondere Folgendes ist: Bestimmen gemäß dem erfassten Platzierungszustandsparameter und der bestimmten rückseitigen Photographieeinheit in dem gestarteten Zustand, dass die erste Audiosensoreinheit einen linken Tonkanal aufzeichnet und die zweite Audiosensoreinheit einen rechten Tonkanal aufzeichnet; oder
falls der aktuelle Platzierungszustand des Endgeräts ein Querrichtungs- und Oberseite-nach-unten-Zustand ist, Erfassen eines aktuellen Platzierungszustandsparameters des Endgeräts und Bestimmen, dass die rückseitige Photographieeinheit in dem gestarteten Zustand ist, wobei das Bestimmen einer Aufzeichnungsbeziehung zwischen den wenigstens zwei Audiosensoreinheiten und den zwei Tonkanälen gemäß dem erfassten Platzierungszustandsparameter und der bestimmten Photographieeinheit in dem gestarteten Zustand insbesondere Folgendes ist: Bestimmen gemäß dem erfassten Platzierungszustandsparameter und der rückseitigen Photographieeinheit in dem gestarteten Zustand, dass die erste Audiosensoreinheit einen rechten Tonkanal aufzeichnet und die zweite Audiosensoreinheit einen linken Tonkanal aufzeichnet.

9. Verfahren nach einem der Ansprüche 3 bis 8, wobei das Einstellen der Lautstärke der wenigstens zwei Audiosensoreinheiten gemäß der Aufzeichnungsbeziehung zwischen den wenigstens zwei Audiosensoreinheiten und den zwei Tonkanälen, so dass eine Differenz zwischen der Lautstärke, die durch die zwei Tonkanäle hindurch tritt, kleiner als ein voreingestellter Schwellenwert ist, Folgendes umfasst:
Einstellen, gemäß einer Aufzeichnungsbeziehung zwischen der ersten Audiosensoreinheit, der zweiten Audiosensoreinheit und den zwei Tonkanälen, der Lautstärke der ersten Audiosensoreinheit und der zweiten Audiosensoreinheit, um beide gleichzeitig allmählich zu erhöhen, beide gleichzeitig allmählich zu verringern oder beide gleichzeitig auf das Maximum zu erhöhen, so dass die Differenz zwischen der Lautstärke, die durch die zwei Tonkanäle hindurch tritt, kleiner als der voreingestellte Schwellenwert ist.

10. Verfahren nach Anspruch 2, wobei: die wenigstens eine Photographieeinheit die vorderseitige Photographieeinheit und die rückseitige Photographieeinheit umfasst;
das Verfahren vor dem Bestimmen, dass eine Photographieeinheit aus der wenigstens einen Photographieeinheit in einem gestarteten Zustand ist, ferner Folgendes umfasst:
Erfassen von Ortsinformationen eines Aufzeichnungsobjekts;
das Bestimmen, dass eine Photographieeinheit aus der wenigstens einen Photographieeinheit in einem gestarteten Zustand ist, insbesondere Folgendes ist:
Bestimmen gemäß den erfassten Ortsinformationen des Aufzeichnungsobjekts, dass die vorderseitige Photographieeinheit oder die rückseitige Photographieeinheit in dem gestarteten Zustand ist; wobei
wenn das Aufzeichnungsobjekt auf derselben Seite wie eine Vorderseite des Endgeräts ist, Bestimmen, dass die vorderseitige Photographieeinheit in dem gestarteten Zustand ist; und wenn das Aufzeichnungsobjekt auf derselben Seite wie eine Rückseite des Endgeräts ist, Bestimmen, dass die rückseitige Photographieeinheit in dem gestarteten Zustand ist.

11. Verfahren nach Anspruch 10, wobei:
die wenigstens zwei Audiosensoreinheiten drei Audiosensoreinheiten sind; und
das Bestimmen einer Aufzeichnungsbeziehung zwischen den wenigstens zwei Audiosensoreinheiten und den zwei Tonkanälen gemäß dem erfassten Platzierungszustandsparameter und der bestimmten Photographieeinheit in dem gestarteten Zustand Folgendes umfasst:
Bestimmen gemäß dem erfassten Platzierungszustandsparameter, dass die drei Audiosensoreinheiten in einem gestarteten Zustand sind; und
Bestimmen gemäß der bestimmten Photographieeinheit in dem gestarteten Zustand, dass zwei Audiosensoreinheiten aus den drei Audiosensoreinheiten einen rechten Tonkanal aufzeichnen und eine Audiosensoreinheit einen linken Tonkanal aufzeichnet, oder dass zwei Audiosensoreinheiten aus den drei Audiosensoreinheiten einen linken Tonkanal aufzeichnen und eine Audiosensoreinheit einen rechten Tonkanal aufzeichnet.

12. Verfahren nach Anspruch 11, wobei das Einstellen der Lautstärke der wenigstens zwei Audiosensoreinheiten gemäß der Aufzeichnungsbeziehung zwischen den wenigstens zwei Audiosensoreinheiten und den zwei Tonkanälen, so dass eine Differenz zwischen der Lautstärke, die durch die zwei Tonkanäle hindurch tritt, kleiner als ein voreingestellter Schwellenwert ist, Folgendes umfasst:
wenn bestimmt wird, dass zwei Audiosensoreinheiten aus den drei Audiosensoreinheiten den rechten Tonkanal aufzeichnen und eine Audiosensoreinheit den linken Tonkanal aufzeichnet, Einstellen der kombinierten Lautstärke der zwei Audiosensoreinheiten, die den rechten Tonkanal aufzeichnen, die kombinierte Lautstärke allmählich zu verringern, und Einstellen der Lautstärke der Audiosensoreinheit, die den linken Tonkanal aufzeichnet, die Lautstärke zu maximieren oder allmählich zu erhöhen, so dass die Differenz zwischen der Lautstärke, die durch die zwei Tonkanäle hindurch tritt, kleiner ist als der voreingestellte Schwellenwert; oder
wenn bestimmt wird, dass zwei Audiosensoreinheiten aus den drei Audiosensoreinheiten den linken Tonkanal aufzeichnen und eine Audiosensoreinheit den rechten Tonkanal aufzeichnet, Einstellen der kombinierten Lautstärke der zwei Audiosensoreinheiten, die den linken Tonkanal aufzeichnen, die kombinierte Lautstärke allmählich zu verringern, und Einstellen der Lautstärke der Audiosensoreinheit, die den rechten Tonkanal aufzeichnet, die Lautstärke zu maximieren oder allmählich zu erhöhen, so dass die Differenz zwischen der Lautstärke, die durch die zwei Tonkanäle hindurch tritt, kleiner ist als der voreingestellte Schwellenwert.

13. Aufzeichnungsvorrichtung, wobei die Vorrichtung auf ein Endgerät angewendet wird, das zwei Tonkanäle, wenigstens zwei Audiosensoreinheiten und wenigstens eine Photographieeinheit umfasst und die Vorrichtung Folgendes umfasst:
eine Platzierungsparametererfassungseinheit, die konfiguriert ist, einen Platzierungszustandsparameter des Endgeräts gemäß dem aktuellen Platzierungszustand des Endgeräts zu erfassen, wobei der Platzierungszustandsparameter Vertikalrichtungs- und Oberseite-nach-oben-Zustand, Vertikalrichtungs- und Oberseite-nach-unten-Zustand, Querrichtungs- und Oberseite-nach-oben-Zustand, Querrichtungs- und Oberseite-nach-unten-Zustand oder geneigten Platzierungszustand enthält;
eine Photographiestartbestimmungseinheit, die konfiguriert ist zu bestimmen, dass eine Photographieeinheit aus der wenigstens einen Photographieeinheit in einem gestarteten Zustand ist;
eine Aufzeichnungsbeziehungsbestimmungseinheit, die konfiguriert ist, eine Aufzeichnungsbeziehung zwischen den wenigstens zwei Audiosensoreinheiten und den zwei Tonkanälen gemäß dem Platzierungszustandsparameter, der durch die Platzierungsparametererfassungseinheit erfasst wird, und der Photographieeinheit, die durch die Photographiestartbestimmungseinheit bestimmt ist, in dem gestarteten Zustand zu bestimmen; und
eine Lautstärkeneinstellungseinheit, die konfiguriert ist, die Lautstärke der wenigstens zwei Audiosensoreinheiten gemäß der Aufzeichnungsbeziehung, die durch die Aufzeichnungsbeziehungsbestimmungseinheit bestimmt ist, und zwischen den wenigstens zwei Audiosensoreinheiten und den zwei Tonkanälen einzustellen, so dass eine Differenz zwischen der Lautstärke, die durch die zwei Tonkanäle hindurch tritt, kleiner ist als ein voreingestellter Schwellenwert;
wobei die Vorrichtung ferner Folgendes umfasst:
eine Speichereinheit, die konfiguriert ist, in dem Endgerät im Voraus eine Aufzeichnungsstrategie zum Bestimmen, gemäß dem aktuellen Platzierungszustand des Endgeräts und der bestimmten Photographieeinheit in dem gestarteten Zustand, der Aufzeichnungsbeziehung zwischen den Audiosensoreinheiten und den Tonkanälen zu speichern; und
die Aufzeichnungsbeziehungsbestimmungseinheit ferner konfiguriert ist, die Aufzeichnungsstrategie abzufragen gemäß dem Platzierungszustandsparameter, der durch die Platzierungsparametererfassungseinheit erfasst wird, und der Photographieeinheit, die durch die Photographiestartbestimmungseinheit bestimmt ist, in dem gestarteten Zustand, um die Aufzeichnungsbeziehung zwischen den wenigstens zwei Audiosensoreinheiten und den zwei Tonkanälen zu bestimmen.

14. Vorrichtung nach Anspruch 13, wobei:
die wenigstens eine Photographieeinheit eine vorderseitige Photographieeinheit und/oder eine rückseitige Photographieeinheit umfasst; und
die Photographiestartbestimmungseinheit insbesondere konfiguriert ist: zu bestimmen, dass die vorderseitige Photographieeinheit oder die rückseitige Photographieeinheit in einem gestarteten Zustand ist.

15. Vorrichtung nach Anspruch 14, wobei:
die wenigstens zwei Audiosensoreinheiten eine erste Audiosensoreinheit und eine zweite Audiosensoreinheit umfassen, wobei die erste Audiosensoreinheit und die zweite Audiosensoreinheit symmetrisch angeordnet sind, wobei eine vertikale Achse des Endgeräts eine Mittellinie ist.

16. Vorrichtung nach Anspruch 14 oder 15, wobei:
wenn die wenigstens eine Photographieeinheit die vorderseitige Photographieeinheit ist, falls der aktuelle Platzierungszustand des Endgeräts ein Vertikalrichtungs- und Oberseite-nach-oben-Zustand ist, erfasst die Platzierungsparametererfassungseinheit einen aktuellen Platzierungszustandsparameter des Endgeräts, und die Photographiestartbestimmungseinheit bestimmt, dass die vorderseitige Photographieeinheit in dem gestarteten Zustand ist, wobei die Aufzeichnungsbeziehungsbestimmungseinheit insbesondere konfiguriert ist: gemäß dem Platzierungszustandsparameter, der durch die Platzierungsparametererfassungseinheit erfasst ist, und der vorderseitigen Photographieeinheit, die durch die Photographiestartbestimmungseinheit bestimmt ist, in dem gestarteten Zustand zu bestimmen, dass die erste Audiosensoreinheit einen rechten Tonkanal aufzeichnet und die zweite Audiosensoreinheit einen linken Tonkanal aufzeichnet; oder
falls der aktuelle Platzierungszustand des Endgeräts ein Vertikalrichtungs- und Oberseite-nach-unten-Zustand ist, erfasst die Platzierungsparametererfassungseinheit einen aktuellen Platzierungszustandsparameter des Endgeräts, und die Photographiestartbestimmungseinheit bestimmt, dass die vorderseitige Photographieeinheit in dem gestarteten Zustand ist, wobei die Aufzeichnungsbeziehungsbestimmungseinheit insbesondere konfiguriert ist: gemäß dem Platzierungszustandsparameter, der durch die Platzierungsparametererfassungseinheit erfasst ist, und der vorderseitigen Photographieeinheit, die durch die Photographiestartbestimmungseinheit bestimmt ist, in dem gestarteten Zustand zu bestimmen, dass die erste Audiosensoreinheit einen linken Tonkanal aufzeichnet und die zweite Audiosensoreinheit einen rechten Tonkanal aufzeichnet.

17. Vorrichtung nach Anspruch 14 oder 15, wobei:
wenn die wenigstens eine Photographieeinheit die rückseitige Photographieeinheit ist,
falls der aktuelle Platzierungszustand des Endgeräts ein Vertikalrichtungs- und Oberseite-nach-oben-Zustand ist, erfasst die Platzierungsparametererfassungseinheit einen aktuellen Platzierungszustandsparameter des Endgeräts, und die Photographiestartbestimmungseinheit bestimmt, dass die rückseitige Photographieeinheit in dem gestarteten Zustand ist, wobei die Aufzeichnungsbeziehungsbestimmungseinheit insbesondere konfiguriert ist: gemäß dem Platzierungszustandsparameter, der durch die Platzierungsparametererfassungseinheit erfasst ist, und der rückseitigen Photographieeinheit, die durch die Photographiestartbestimmungseinheit bestimmt ist, in dem gestarteten Zustand zu bestimmen, dass die erste Audiosensoreinheit einen linken Tonkanal aufzeichnet und die zweite Audiosensoreinheit einen rechten Tonkanal aufzeichnet; oder
falls der aktuelle Platzierungszustand des Endgeräts ein Vertikalrichtungs- und Oberseite-nach-unten-Zustand ist, erfasst die Platzierungsparametererfassungseinheit einen aktuellen Platzierungszustandsparameter des Endgeräts, und die Photographiestartbestimmungseinheit bestimmt, dass die rückseitige Photographieeinheit in dem gestarteten Zustand ist, wobei die Aufzeichnungsbeziehungsbestimmungseinheit insbesondere konfiguriert ist: gemäß dem Platzierungszustandsparameter, der durch die Platzierungsparametererfassungseinheit erfasst ist, und der rückseitigen Photographieeinheit, die durch die Photographiestartbestimmungseinheit bestimmt ist, in dem gestarteten Zustand zu bestimmen, dass die erste Audiosensoreinheit einen rechten Tonkanal aufzeichnet und die zweite Audiosensoreinheit einen linken Tonkanal aufzeichnet.

18. Vorrichtung nach Anspruch 14, wobei:
die wenigstens zwei Audiosensoreinheiten eine erste Audiosensoreinheit und eine zweite Audiosensoreinheit umfassen, wobei die erste Audiosensoreinheit und die zweite Audiosensoreinheit symmetrisch angeordnet sind, wobei eine Querachse des Endgeräts eine Mittellinie ist.

19. Vorrichtung nach Anspruch 14 oder 18, wobei:
wenn die wenigstens eine Photographieeinheit die vorderseitige Photographieeinheit ist,
falls der aktuelle Platzierungszustand des Endgeräts ein Querrichtungs- und Oberseite-nach-oben-Zustand ist, erfasst die Platzierungsparametererfassungseinheit einen aktuellen Platzierungszustandsparameter des Endgeräts, und die Photographiestartbestimmungseinheit bestimmt, dass die vorderseitige Photographieeinheit in dem gestarteten Zustand ist, wobei die Aufzeichnungsbeziehungsbestimmungseinheit insbesondere konfiguriert ist: gemäß dem Platzierungszustandsparameter, der durch die Platzierungsparametererfassungseinheit erfasst ist, und der vorderseitigen Photographieeinheit, die durch die Photographiestartbestimmungseinheit bestimmt ist, in dem gestarteten Zustand zu bestimmen, dass die erste Audiosensoreinheit einen rechten Tonkanal aufzeichnet und die zweite Audiosensoreinheit einen linken Tonkanal aufzeichnet; oder
falls der aktuelle Platzierungszustand des Endgeräts ein Querrichtungs- und Oberseite-nach-unten-Zustand ist, erfasst die Platzierungsparametererfassungseinheit einen aktuellen Platzierungszustandsparameter des Endgeräts, und die Photographiestartbestimmungseinheit bestimmt, dass die vorderseitige Photographieeinheit in dem gestarteten Zustand ist, wobei die Aufzeichnungsbeziehungsbestimmungseinheit insbesondere konfiguriert ist: gemäß dem Platzierungszustandsparameter, der durch die Platzierungsparametererfassungseinheit erfasst ist, und der vorderseitigen Photographieeinheit, die durch die Photographiestartbestimmungseinheit bestimmt ist, in dem gestarteten Zustand zu bestimmen, dass die erste Audiosensoreinheit einen linken Tonkanal aufzeichnet und die zweite Audiosensoreinheit einen rechten Tonkanal aufzeichnet.

20. Vorrichtung nach Anspruch 14 oder 18, wobei: wenn die wenigstens eine Photographieeinheit die rückseitige Photographieeinheit ist, falls der aktuelle Platzierungszustand des Endgeräts ein Querrichtungs- und Oberseite-nach-oben-Zustand ist, erfasst die Platzierungsparametererfassungseinheit einen aktuellen Platzierungszustandsparameter des Endgeräts, und die Photographiestartbestimmungseinheit bestimmt, dass die rückseitige Photographieeinheit in dem gestarteten Zustand ist, wobei die Aufzeichnungsbeziehungsbestimmungseinheit insbesondere konfiguriert ist: gemäß dem Platzierungszustandsparameter, der durch die Platzierungsparametererfassungseinheit erfasst ist, und der rückseitigen Photographieeinheit, die durch die Photographiestartbestimmungseinheit bestimmt ist, in dem gestarteten Zustand zu bestimmen, dass die erste Audiosensoreinheit einen linken Tonkanal aufzeichnet und die zweite Audiosensoreinheit einen rechten Tonkanal aufzeichnet; oder
falls der aktuelle Platzierungszustand des Endgeräts ein Querrichtungs- und Oberseite-nach-unten-Zustand ist, erfasst die Platzierungsparametererfassungseinheit einen aktuellen Platzierungszustandsparameter des Endgeräts, und die Photographiestartbestimmungseinheit bestimmt, dass die rückseitige Photographieeinheit in dem gestarteten Zustand ist, wobei die Aufzeichnungsbeziehungsbestimmungseinheit insbesondere konfiguriert ist: gemäß dem Platzierungszustandsparameter, der durch die Platzierungsparametererfassungseinheit erfasst ist, und der rückseitigen Photographieeinheit, die durch die Photographiestartbestimmungseinheit bestimmt ist, in dem gestarteten Zustand zu bestimmen, dass die erste Audiosensoreinheit einen rechten Tonkanal aufzeichnet und die zweite Audiosensoreinheit einen linken Tonkanal aufzeichnet.

21. Vorrichtung nach einem der Ansprüche 15 bis 20, wobei die Lautstärkeneinstellungseinheit insbesondere konfiguriert ist:
gemäß einer Aufzeichnungsbeziehung zwischen der ersten Audiosensoreinheit, der zweiten Audiosensoreinheit und den zwei Tonkanälen die Lautstärke der ersten Audiosensoreinheit und der zweiten Audiosensoreinheit einzustellen, um beide gleichzeitig allmählich zu erhöhen, beide gleichzeitig allmählich zu verringern oder beide gleichzeitig auf das Maximum zu erhöhen, so dass die Differenz zwischen der Lautstärke, die durch die zwei Tonkanäle hindurch tritt, kleiner als der voreingestellte Schwellenwert ist.

22. Vorrichtung nach Anspruch 14, wobei die wenigstens eine Photographieeinheit die vorderseitige Photographieeinheit und die rückseitige Photographieeinheit umfasst; wobei die Vorrichtung ferner Folgendes umfasst:
eine Ortsinformationserfassungseinheit, die konfiguriert ist, Ortsinformationen eines Aufzeichnungsobjekts zu erfassen;
wobei die Photographiestartbestimmungseinheit insbesondere konfiguriert ist: gemäß den Ortsinformationen, die zu dem Aufzeichnungsobjekt gehören und durch die Ortsinformationserfassungseinheit erfasst sind, zu bestimmen, dass die vorderseitige Photographieeinheit oder die rückseitige Photographieeinheit in dem gestarteten Zustand ist, wobei:
wenn das Aufzeichnungsobjekt auf derselben Seite wie eine Vorderseite des Endgeräts ist, die Photographiestartbestimmungseinheit bestimmt, dass die vorderseitige Photographieeinheit in dem gestarteten Zustand ist; und wenn das Aufzeichnungsobjekt auf derselben Seite wie eine Rückseite des Endgeräts ist, die Photographiestartbestimmungseinheit bestimmt, dass die rückseitige Photographieeinheit in dem gestarteten Zustand ist.

23. Vorrichtung nach Anspruch 22, wobei:
die wenigstens zwei Audiosensoreinheiten drei Audiosensoreinheiten sind; und die Aufzeichnungsbeziehungsbestimmungseinheit insbesondere konfiguriert ist:
gemäß dem erfassten Platzierungszustandsparameter zu bestimmen, dass die drei Audiosensoreinheiten in einem gestarteten Zustand sind; und
gemäß der bestimmten Photographieeinheit in dem gestarteten Zustand zu bestimmen, dass zwei Audiosensoreinheiten aus den drei Audiosensoreinheiten einen rechten Tonkanal aufzeichnen und eine Audiosensoreinheit einen linken Tonkanal aufzeichnet, oder dass zwei Audiosensoreinheiten aus den drei Audiosensoreinheiten einen linken Tonkanal aufzeichnen und eine Audiosensoreinheit einen rechten Tonkanal aufzeichnet.

24. Vorrichtung nach Anspruch 23, wobei die Lautstärkeneinstellungseinheit insbesondere konfiguriert ist:
wenn bestimmt wird, dass zwei Audiosensoreinheiten aus den drei Audiosensoreinheiten den rechten Tonkanal aufzeichnen und eine Audiosensoreinheit den linken Tonkanal aufzeichnet, die kombinierte Lautstärke der zwei Audiosensoreinheiten, die den rechten Tonkanal aufzeichnen, einzustellen, die kombinierte Lautstärke allmählich zu verringern, und die Lautstärke der Audiosensoreinheit, die den linken Tonkanal aufzeichnet, einzustellen, die Lautstärke zu maximieren oder allmählich zu erhöhen, so dass die Differenz zwischen der Lautstärke, die durch die zwei Tonkanäle hindurch tritt, kleiner ist als der voreingestellte Schwellenwert; oder
wenn bestimmt wird, dass zwei Audiosensoreinheiten aus den drei Audiosensoreinheiten den linken Tonkanal aufzeichnen und eine Audiosensoreinheit den rechten Tonkanal aufzeichnet, die kombinierte Lautstärke der zwei Audiosensoreinheiten, die den linken Tonkanal aufzeichnen, einzustellen, die kombinierte Lautstärke allmählich zu verringern, und die Lautstärke der Audiosensoreinheit, die den rechten Tonkanal aufzeichnet, einzustellen, die Lautstärke zu maximieren oder allmählich zu erhöhen, so dass die Differenz zwischen der Lautstärke, die durch die zwei Tonkanäle hindurch tritt, kleiner ist als der voreingestellte Schwellenwert.

25. Aufzeichnungsendgerät, wobei das Endgerät zwei Tonkanäle, wenigstens zwei Audiosensoreinheiten, wenigstens eine Photographieeinheit und die Aufzeichnungsvorrichtung nach einem der Ansprüche 13 bis 24 umfasst.

## Revendications

1. Procédé d'enregistrement, le procédé étant appliqué à un terminal qui comprend deux canaux sonores, au moins deux unités de détection audio et au moins une unité photographique, et le procédé comprenant les opérations suivantes :
acquérir un paramètre d'état de positionnement du terminal en fonction d'un état de positionnement en cours du terminal, le paramètre d'état de positionnement comportant un état dans la direction verticale et à l'endroit, un état dans la direction verticale et à l'envers, un état dans la direction transversale et à l'endroit, un état dans la direction transversale et à l'envers, ou un état de positionnement incliné ;
déterminer qu'une unité photographique de l'au moins une unité photographique est dans un état démarré ;
déterminer une correspondance d'enregistrement entre les au moins deux unités de détection audio et les deux canaux sonores en fonction du paramètre d'état de positionnement acquis et de l'unité photographique déterminée dans l'état démarré ; et
ajuster le volume des au moins deux unités de détection audio en fonction de la correspondance d'enregistrement entre les au moins deux unités de détection audio et les deux canaux sonores, de telle sorte qu'une différence entre le volume qui passe par les deux canaux sonores soit inférieure à un seuil préréglé ;
le procédé comprenant en outre l'opération suivante :
stocker une politique d'enregistrement visant à déterminer, en fonction de l'état de positionnement du terminal et de l'unité photographique dans l'état démarré, la correspondance d'enregistrement entre les unités de détection audio et les canaux sonores ; et
l'opération consistant à déterminer une correspondance d'enregistrement entre les au moins deux unités de détection audio et les deux canaux sonores en fonction du paramètre d'état de positionnement acquis et de l'unité photographique déterminée dans l'état démarré étant spécifiquement : l'opération consistant à interroger la politique d'enregistrement en fonction du paramètre d'état de positionnement acquis et de l'unité photographique déterminée dans l'état démarré, de manière à déterminer la correspondance d'enregistrement entre les au moins deux unités de détection audio et les deux canaux sonores.

2. Procédé selon la revendication 1, dans lequel :
l'au moins une unité photographique comprend une unité photographique avant et/ou une unité photographique arrière ; et
l'opération consistant à déterminer qu'une unité photographique de l'au moins une unité photographique est dans un état démarré étant spécifiquement : l'opération consistant à déterminer que l'unité photographique avant ou l'unité photographique arrière est dans un état démarré.

3. Procédé selon la revendication 2, dans lequel :
les au moins deux unités de détection audio comprennent une première unité de détection audio et une deuxième unité de détection audio, la première unité de détection audio et la deuxième unité de détection audio étant agencées symétriquement, avec un axe vertical du terminal étant une ligne centrale.

4. Procédé selon la revendication 2 ou 3, le procédé comprenant les opérations suivantes :
quand l'au moins une unité photographique est l'unité photographique avant,
si l'état de positionnement en cours du terminal est un état dans la direction verticale et à l'endroit, acquérir un paramètre d'état de positionnement en cours du terminal, et déterminer que l'unité photographique avant est dans l'état démarré, l'opération consistant à déterminer une correspondance d'enregistrement entre les au moins deux unités de détection audio et les deux canaux sonores en fonction du paramètre d'état de positionnement acquis et de l'unité photographique déterminée dans l'état démarré étant spécifiquement : l'opération consistant à déterminer, en fonction du paramètre d'état de positionnement acquis et de l'unité photographique avant déterminée dans l'état démarré, que la première unité de détection audio enregistre un canal sonore droit et la deuxième unité de détection audio enregistre un canal sonore gauche ; ou
si l'état de positionnement en cours du terminal est un état dans la direction verticale et à l'envers, acquérir un paramètre d'état de positionnement en cours du terminal, et déterminer que l'unité photographique avant est dans l'état démarré, l'opération consistant à déterminer une correspondance d'enregistrement entre les au moins deux unités de détection audio et les deux canaux sonores en fonction du paramètre d'état de positionnement acquis et de l'unité photographique déterminée dans l'état démarré étant spécifiquement : l'opération consistant à déterminer, en fonction du paramètre d'état de positionnement acquis et de l'unité photographique avant déterminée dans l'état démarré, que la première unité de détection audio enregistre un canal sonore gauche et la deuxième unité de détection audio enregistre un canal sonore droit.

5. Procédé selon la revendication 2 ou 3, le procédé comprenant les opérations suivantes :
quand l'au moins une unité photographique est l'unité photographique arrière,
si l'état de positionnement en cours du terminal est un état dans la direction verticale et à l'endroit, acquérir un paramètre d'état de positionnement en cours du terminal, et déterminer que l'unité photographique arrière est dans l'état démarré, l'opération consistant à déterminer une correspondance d'enregistrement entre les au moins deux unités de détection audio et les deux canaux sonores en fonction du paramètre d'état de positionnement acquis et de l'unité photographique déterminée dans l'état démarré étant spécifiquement : l'opération consistant à déterminer, en fonction du paramètre d'état de positionnement acquis et de l'unité photographique arrière déterminée dans l'état démarré, que la première unité de détection audio enregistre un canal sonore gauche et la deuxième unité de détection audio enregistre un canal sonore droit ; ou
si l'état de positionnement en cours du terminal est un état dans la direction verticale et à l'envers, acquérir un paramètre d'état de positionnement en cours du terminal, et déterminer que l'unité photographique arrière est dans l'état démarré, l'opération consistant à déterminer une correspondance d'enregistrement entre les au moins deux unités de détection audio et les deux canaux sonores en fonction du paramètre d'état de positionnement acquis et de l'unité photographique déterminée dans l'état démarré étant spécifiquement : l'opération consistant à déterminer, en fonction du paramètre d'état de positionnement acquis et de l'unité photographique arrière déterminée dans l'état démarré, que la première unité de détection audio enregistre un canal sonore droit et la deuxième unité de détection audio enregistre un canal sonore gauche.

6. Procédé selon la revendication 2, dans lequel :
les au moins deux unités de détection audio comprennent une première unité de détection audio et une deuxième unité de détection audio, la première unité de détection audio et la deuxième unité de détection audio étant agencées symétriquement, avec un axe transversal du terminal étant une ligne centrale.

7. Procédé selon la revendication 2 ou 6, le procédé comprenant les opérations suivantes :
quand l'au moins une unité photographique est l'unité photographique avant,
si l'état de positionnement en cours du terminal est un état dans la direction transversale et à l'endroit, acquérir un paramètre d'état de positionnement en cours du terminal, et déterminer que l'unité photographique avant est dans l'état démarré, l'opération consistant à déterminer une correspondance d'enregistrement entre les au moins deux unités de détection audio et les deux canaux sonores en fonction du paramètre d'état de positionnement acquis et de l'unité photographique déterminée dans l'état démarré étant spécifiquement : l'opération consistant à déterminer, en fonction du paramètre d'état de positionnement acquis et de l'unité photographique avant déterminée dans l'état démarré, que la première unité de détection audio enregistre un canal sonore droit et la deuxième unité de détection audio enregistre un canal sonore gauche ; ou
si l'état de positionnement en cours du terminal est un état dans la direction transversale et à l'envers, acquérir un paramètre d'état de positionnement en cours du terminal, et déterminer que l'unité photographique avant est dans l'état démarré, l'opération consistant à déterminer une correspondance d'enregistrement entre les au moins deux unités de détection audio et les deux canaux sonores en fonction du paramètre d'état de positionnement acquis et de l'unité photographique déterminée dans l'état démarré étant spécifiquement : l'opération consistant à déterminer, en fonction du paramètre d'état de positionnement acquis et de l'unité photographique avant déterminée dans l'état démarré, que la première unité de détection audio enregistre un canal sonore gauche et la deuxième unité de détection audio enregistre un canal sonore droit.

8. Procédé selon la revendication 2 ou 6, le procédé comprenant les opérations suivantes :
quand l'au moins une unité photographique est l'unité photographique arrière,
si l'état de positionnement en cours du terminal est un état dans la direction transversale et à l'endroit, acquérir un paramètre d'état de positionnement en cours du terminal, et déterminer que l'unité photographique arrière est dans l'état démarré, l'opération consistant à déterminer une correspondance d'enregistrement entre les au moins deux unités de détection audio et les deux canaux sonores en fonction du paramètre d'état de positionnement acquis et de l'unité photographique déterminée dans l'état démarré étant spécifiquement : l'opération consistant à déterminer, en fonction du paramètre d'état de positionnement acquis et de l'unité photographique arrière déterminée dans l'état démarré, que la première unité de détection audio enregistre un canal sonore gauche et la deuxième unité de détection audio enregistre un canal sonore droit ; ou
si l'état de positionnement en cours du terminal est un état dans la direction transversale et à l'envers, acquérir un paramètre d'état de positionnement en cours du terminal, et déterminer que l'unité photographique arrière est dans l'état démarré, l'opération consistant à déterminer une correspondance d'enregistrement entre les au moins deux unités de détection audio et les deux canaux sonores en fonction du paramètre d'état de positionnement acquis et de l'unité photographique déterminée dans l'état démarré étant spécifiquement : l'opération consistant à déterminer, en fonction du paramètre d'état de positionnement acquis et de l'unité photographique arrière dans l'état démarré, que la première unité de détection audio enregistre un canal sonore droit et la deuxième unité de détection audio enregistre un canal sonore gauche.

9. Procédé selon l'une quelconque des revendications 3 à 8, dans lequel l'ajustement du volume des au moins deux unités de détection audio en fonction de la correspondance d'enregistrement entre les au moins deux unités de détection audio et les deux canaux sonores, de telle sorte qu'une différence entre le volume qui passe par les deux canaux sonores soit inférieure à un seuil préréglé comprend les opérations suivantes :
ajuster, en fonction d'une correspondance d'enregistrement entre la première unité de détection audio, la deuxième unité de détection audio, et les deux canaux sonores, le volume de la première unité de détection audio et de la deuxième unité de détection audio pour augmenter progressivement les deux simultanément, diminuer progressivement les deux simultanément, ou augmenter les deux jusqu'à un maximum simultanément, de telle sorte que la différence entre le volume qui passe par les deux canaux sonores soit inférieure au seuil préréglé.

10. Procédé selon la revendication 2, dans lequel : l'au moins une unité photographique comprend l'unité photographique avant et l'unité photographique arrière ;
avant l'opération consistant à déterminer qu'une unité photographique de l'au moins une unité photographique est dans un état démarré, le procédé comprenant en outre l'opération suivante :
acquérir des informations d'emplacement d'un objet d'enregistrement ;
l'opération consistant à déterminer qu'une unité photographique de l'au moins une unité photographique est dans un état démarré étant spécifiquement : l'opération consistant à déterminer, en fonction des informations d'emplacement de l'objet d'enregistrement acquises, que l'unité photographique avant ou l'unité photographique arrière est dans l'état démarré ; dans lequel
quand l'objet d'enregistrement est sur un même côté qu'une surface avant du terminal, il est déterminé que l'unité photographique avant est dans l'état démarré ; et
quand l'objet d'enregistrement est sur un même côté qu'une surface arrière du terminal, il est déterminé que l'unité photographique arrière est dans l'état démarré.

11. Procédé selon la revendication 10, dans lequel :
les au moins deux unités de détection audio sont trois unités de détection audio ; et
l'opération consistant à déterminer une correspondance d'enregistrement entre les au moins deux unités de détection audio et les deux canaux sonores en fonction du paramètre d'état de positionnement acquis et de l'unité photographique déterminée dans l'état démarré comprend les opérations suivantes :
déterminer, en fonction du paramètre d'état de positionnement acquis, que les trois unités de détection audio sont dans un état démarré ; et
déterminer, en fonction de l'unité photographique déterminée dans l'état démarré, que deux unités de détection audio sur les trois unités de détection audio enregistrent un canal sonore droit et une unité de détection audio enregistre un canal sonore gauche, ou que deux unités de détection audio sur les trois unités de détection audio enregistrent un canal sonore gauche et une unité de détection audio enregistre un canal sonore droit.

12. Procédé selon la revendication 11, dans lequel l'ajustement du volume des au moins deux unités de détection audio en fonction de la correspondance d'enregistrement entre les au moins deux unités de détection audio et les deux canaux sonores, de telle sorte qu'une différence entre le volume qui passe par les deux canaux sonores soit inférieure à un seuil préréglé comprend les opérations suivantes :
quand il est déterminé que deux unités de détection audio sur les trois unités de détection audio enregistrent le canal sonore droit et une unité de détection audio enregistre le canal sonore gauche, ajuster le volume combiné des deux unités de détection audio qui enregistrent le canal sonore droit pour diminuer progressivement le volume combiné, et ajuster le volume de l'unité de détection audio qui enregistre le canal sonore gauche au maximum ou pour augmenter progressivement le volume, de telle sorte que la différence entre le volume qui passe par les deux canaux sonores soit inférieure au seuil préréglé ; ou
quand il est déterminé que deux unités de détection audio sur les trois unités de détection audio enregistrent le canal sonore gauche et une unité de détection audio enregistre le canal sonore droit, ajuster le volume combiné des deux unités de détection audio qui enregistrent le canal sonore gauche pour diminuer progressivement le volume combiné, et ajuster le volume de l'unité de détection audio qui enregistre le canal sonore droit au maximum ou pour augmenter progressivement le volume, de telle sorte que la différence entre le volume qui passe par les deux canaux sonores soit inférieure au seuil préréglé.

13. Appareil d'enregistrement, l'appareil étant appliqué à un terminal qui comprend deux canaux sonores, au moins deux unités de détection audio et au moins une unité photographique, et l'appareil comprenant :
une unité d'acquisition de paramètre de positionnement, configurée pour acquérir un paramètre d'état de positionnement du terminal en fonction d'un état de positionnement en cours du terminal, le paramètre d'état de positionnement comportant un état dans la direction verticale et à l'endroit, un état dans la direction verticale et à l'envers, un état dans la direction transversale et à l'endroit, un état dans la direction transversale et à l'envers, ou un état de positionnement incliné ;
une unité de détermination de démarrage de photographie, configurée pour déterminer qu'une unité photographique de l'au moins une unité photographique est dans un état démarré ;
une unité de détermination de relation d'enregistrement, configurée pour déterminer une correspondance d'enregistrement entre les au moins deux unités de détection audio et les deux canaux sonores en fonction du paramètre d'état de positionnement acquis par l'unité d'acquisition de paramètre de positionnement, et de l'unité photographique, déterminée par l'unité de détermination de démarrage de photographie, dans l'état démarré ; et
une unité d'ajustement du volume, configurée pour ajuster le volume des au moins deux unités de détection audio en fonction de la correspondance d'enregistrement qui est déterminée par l'unité de détermination de relation d'enregistrement et entre les au moins deux unités de détection audio et les deux canaux sonores, de telle sorte qu'une différence entre le volume qui passe par les deux canaux sonores soit inférieure à un seuil préréglé ;
l'appareil comprenant en outre :
une unité de stockage, configurée pour stocker, dans le terminal à l'avance, une politique d'enregistrement visant à déterminer, en fonction de l'état de positionnement en cours du terminal et de l'unité photographique déterminée dans l'état démarré, la correspondance d'enregistrement entre les unités de détection audio et les canaux sonores ; et
l'unité de détermination de relation d'enregistrement étant également configurée pour interroger la politique d'enregistrement en fonction du paramètre d'état de positionnement acquis par l'unité d'acquisition de paramètre de positionnement, et de l'unité photographique, déterminée par l'unité de détermination de démarrage de photographie, dans l'état démarré, de manière à déterminer la correspondance d'enregistrement entre les au moins deux unités de détection audio et les deux canaux sonores.

14. Appareil selon la revendication 13, dans lequel :
l'au moins une unité photographique comprend une unité photographique avant et/ou une unité photographique arrière ; et
l'unité de détermination de démarrage de photographie est spécifiquement configurée pour : déterminer que l'unité photographique avant ou l'unité photographique arrière est dans un état démarré.

15. Appareil selon la revendication 14, dans lequel :
les au moins deux unités de détection audio comprennent une première unité de détection audio et une deuxième unité de détection audio, la première unité de détection audio et la deuxième unité de détection audio étant agencées symétriquement, avec un axe vertical du terminal étant une ligne centrale.

16. Appareil selon la revendication 14 ou 15, dans lequel :
quand l'au moins une unité photographique est l'unité photographique avant,
si l'état de positionnement en cours du terminal est un état dans la direction verticale et à l'endroit, l'unité d'acquisition de paramètre de positionnement acquiert un paramètre d'état de positionnement en cours du terminal, et l'unité de détermination de démarrage de photographie détermine que l'unité photographique avant est dans l'état démarré, l'unité de détermination de relation d'enregistrement étant spécifiquement configurée pour : déterminer, en fonction du paramètre d'état de positionnement acquis par l'unité d'acquisition de paramètre de positionnement, et de l'unité photographique avant, déterminée par l'unité de détermination de démarrage de photographie, dans l'état démarré, que la première unité de détection audio enregistre un canal sonore droit et la deuxième unité de détection audio enregistre un canal sonore gauche ; ou
si l'état de positionnement en cours du terminal est un état dans la direction verticale et à l'envers, l'unité d'acquisition de paramètre de positionnement acquiert un paramètre d'état de positionnement en cours du terminal, et l'unité de détermination de démarrage de photographie détermine que l'unité photographique avant est dans l'état démarré, l'unité de détermination de relation d'enregistrement étant spécifiquement configurée pour : déterminer, en fonction du paramètre d'état de positionnement acquis par l'unité d'acquisition de paramètre de positionnement, et de l'unité photographique avant, déterminée par l'unité de détermination de démarrage de photographie, dans l'état démarré, que la première unité de détection audio enregistre un canal sonore gauche et la deuxième unité de détection audio enregistre un canal sonore droit.

17. Appareil selon la revendication 14 ou 15, dans lequel :
quand l'au moins une unité photographique est l'unité photographique arrière,
si l'état de positionnement en cours du terminal est un état dans la direction verticale et à l'endroit, l'unité d'acquisition de paramètre de positionnement acquiert un paramètre d'état de positionnement en cours du terminal, et l'unité de détermination de démarrage de photographie détermine que l'unité photographique arrière est dans l'état démarré, l'unité de détermination de relation d'enregistrement étant spécifiquement configurée pour : déterminer, en fonction du paramètre d'état de positionnement acquis par l'unité d'acquisition de paramètre de positionnement, et de l'unité photographique arrière, déterminée par l'unité de détermination de démarrage de photographie, dans l'état démarré, que la première unité de détection audio enregistre un canal sonore gauche et la deuxième unité de détection audio enregistre un canal sonore droit ; ou
si l'état de positionnement en cours du terminal est un état dans la direction verticale et à l'envers, l'unité d'acquisition de paramètre de positionnement acquiert un paramètre d'état de positionnement en cours du terminal, et l'unité de détermination de démarrage de photographie détermine que l'unité photographique arrière est dans l'état démarré, l'unité de détermination de relation d'enregistrement étant spécifiquement configurée pour : déterminer, en fonction du paramètre d'état de positionnement acquis par l'unité d'acquisition de paramètre de positionnement, et de l'unité photographique arrière, déterminée par l'unité de détermination de démarrage de photographie, dans l'état démarré, que la première unité de détection audio enregistre un canal sonore droit et la deuxième unité de détection audio enregistre un canal sonore gauche.

18. Appareil selon la revendication 14, dans lequel :
les au moins deux unités de détection audio comprennent une première unité de détection audio et une deuxième unité de détection audio, la première unité de détection audio et la deuxième unité de détection audio étant agencées symétriquement, avec un axe transversal du terminal étant une ligne centrale.

19. Appareil selon la revendication 14 ou 18, dans lequel :
quand l'au moins une unité photographique est l'unité photographique avant,
si l'état de positionnement en cours du terminal est un état dans la direction transversale et à l'endroit, l'unité d'acquisition de paramètre de positionnement acquiert un paramètre d'état de positionnement en cours du terminal, et l'unité de détermination de démarrage de photographie détermine que l'unité photographique avant est dans l'état démarré, l'unité de détermination de relation d'enregistrement étant spécifiquement configurée pour : déterminer, en fonction du paramètre d'état de positionnement acquis par l'unité d'acquisition de paramètre de positionnement, et de l'unité photographique avant, déterminée par l'unité de détermination de démarrage de photographie, dans l'état démarré, que la première unité de détection audio enregistre un canal sonore droit et la deuxième unité de détection audio enregistre un canal sonore gauche ; ou
si l'état de positionnement en cours du terminal est un état dans la direction transversale et à l'envers, l'unité d'acquisition de paramètre de positionnement acquiert un paramètre d'état de positionnement en cours du terminal, et l'unité de détermination de démarrage de photographie détermine que l'unité photographique avant est dans l'état démarré, l'unité de détermination de relation d'enregistrement étant spécifiquement configurée pour : déterminer, en fonction du paramètre d'état de positionnement acquis par l'unité d'acquisition de paramètre de positionnement, et de l'unité photographique avant, déterminée par l'unité de détermination de démarrage de photographie, dans l'état démarré, que la première unité de détection audio enregistre un canal sonore gauche et la deuxième unité de détection audio enregistre un canal sonore droit.

20. Appareil selon la revendication 14 ou 18, dans lequel :
quand l'au moins une unité photographique est l'unité photographique arrière,
si l'état de positionnement en cours du terminal est un état dans la direction transversale et à l'endroit, l'unité d'acquisition de paramètre de positionnement acquiert un paramètre d'état de positionnement en cours du terminal, et l'unité de détermination de démarrage de photographie détermine que l'unité photographique arrière est dans l'état démarré, l'unité de détermination de relation d'enregistrement étant spécifiquement configurée pour : déterminer, en fonction du paramètre d'état de positionnement acquis par l'unité d'acquisition de paramètre de positionnement, et de l'unité photographique arrière, déterminée par l'unité de détermination de démarrage de photographie, dans l'état démarré, que la première unité de détection audio enregistre un canal sonore gauche et la deuxième unité de détection audio enregistre un canal sonore droit ; ou
si l'état de positionnement en cours du terminal est un état dans la direction transversale et à l'envers, l'unité d'acquisition de paramètre de positionnement acquiert un paramètre d'état de positionnement en cours du terminal, et l'unité de détermination de démarrage de photographie détermine que l'unité photographique arrière est dans l'état démarré, l'unité de détermination de relation d'enregistrement étant spécifiquement configurée pour : déterminer, en fonction du paramètre d'état de positionnement acquis par l'unité d'acquisition de paramètre de positionnement, et de l'unité photographique arrière, déterminée par l'unité de détermination de démarrage de photographie, dans l'état démarré, que la première unité de détection audio enregistre un canal sonore droit et la deuxième unité de détection audio enregistre un canal sonore gauche.

21. Appareil selon l'une quelconque des revendications 15 à 20, dans lequel l'unité d'ajustement du volume est spécifiquement configurée pour :
ajuster, en fonction d'une correspondance d'enregistrement entre la première unité de détection audio, la deuxième unité de détection audio, et les deux canaux sonores, le volume de la première unité de détection audio et de la deuxième unité de détection audio pour augmenter progressivement les deux simultanément, diminuer progressivement les deux simultanément, ou augmenter les deux jusqu'à un maximum simultanément, de telle sorte que la différence entre le volume qui passe par les deux canaux sonores soit inférieure au seuil préréglé.

22. Appareil selon la revendication 14, dans lequel l'au moins une unité photographique comprend l'unité photographique avant et l'unité photographique arrière ; l'appareil comprenant en outre :
une unité d'acquisition d'informations d'emplacement, configurée pour acquérir des informations d'emplacement d'un objet d'enregistrement ;
l'unité de détermination de démarrage de photographie étant spécifiquement configurée pour : déterminer, en fonction des informations d'emplacement concernant l'objet d'enregistrement et acquises par l'unité d'acquisition d'informations d'emplacement, que l'unité photographique avant ou l'unité photographique arrière est dans l'état démarré, dans lequel :
quand l'objet d'enregistrement est sur un même côté qu'une surface avant du terminal, l'unité de détermination de démarrage de photographie détermine que l'unité photographique avant est dans l'état démarré ; et quand l'objet d'enregistrement est sur un même côté qu'une surface arrière du terminal, l'unité de détermination de démarrage de photographie détermine que l'unité photographique arrière est dans l'état démarré.

23. Appareil selon la revendication 22, dans lequel :
les au moins deux unités de détection audio sont trois unités de détection audio ; et l'unité de détermination de relation d'enregistrement est spécifiquement configurée pour :
déterminer, en fonction du paramètre d'état de positionnement acquis, que les trois unités de détection audio sont dans un état démarré ; et
déterminer, en fonction de l'unité photographique déterminée dans l'état démarré, que deux unités de détection audio sur les trois unités de détection audio enregistrent un canal sonore droit et une unité de détection audio enregistre un canal sonore gauche, ou que deux unités de détection audio sur les trois unités de détection audio enregistrent un canal sonore gauche et une unité de détection audio enregistre un canal sonore droit.

24. Appareil selon la revendication 23, dans lequel l'unité d'ajustement du volume est spécifiquement configurée pour :
quand il est déterminé que deux unités de détection audio sur les trois unités de détection audio enregistrent le canal sonore droit et une unité de détection audio enregistre le canal sonore gauche, ajuster le volume combiné des deux unités de détection audio qui enregistrent le canal sonore droit pour diminuer progressivement le volume combiné, et ajuster le volume de l'unité de détection audio qui enregistre le canal sonore gauche au maximum ou pour augmenter progressivement le volume, de telle sorte que la différence entre le volume qui passe par les deux canaux sonores soit inférieure au seuil préréglé ; ou
quand il est déterminé que deux unités de détection audio sur les trois unités de détection audio enregistrent le canal sonore gauche et une unité de détection audio enregistre le canal sonore droit, ajuster le volume combiné des deux unités de détection audio qui enregistrent le canal sonore gauche pour diminuer progressivement le volume combiné, et ajuster le volume de l'unité de détection audio qui enregistre le canal sonore droit au maximum ou pour augmenter progressivement le volume, de telle sorte que la différence entre le volume qui passe par les deux canaux sonores soit inférieure au seuil préréglé.

25. Terminal d'enregistrement, le terminal comprenant deux canaux sonores, au moins deux unités de détection audio, au moins une unité photographique, et l'appareil d'enregistrement selon l'une quelconque des revendications 13 à 24.
